Europäisches Patentamt

European Patent Office

Office européen des brevets

(19)

(11) **EP 1 445 812 A1**

(12) **EUROPEAN PATENT APPLICATION**
published in accordance with Art. 158(3) EPC

(43) Date of publication:
**11.08.2004 Bulletin 2004/33**

(51) Int Cl.[7]: **H01M 6/08**, H01M 4/52,
H01M 4/62, H01M 4/66,
H01M 10/30

(21) Application number: **02801572.5**

(22) Date of filing: **15.10.2002**

(86) International application number:
**PCT/JP2002/010683**

(87) International publication number:
**WO 2003/034520 (24.04.2003 Gazette 2003/17)**

(84) Designated Contracting States:
**AT BE BG CH CY CZ DE DK EE ES FI FR GB GR
IE IT LI LU MC NL PT SE SK TR**

(30) Priority: **17.10.2001 JP 2001319855
17.10.2001 JP 2001319857
17.10.2001 JP 2001319858**

(71) Applicant: **Sony Corporation
Tokyo 141-0001 (JP)**

(72) Inventors:
• **TAKAHASHI, Akio,
c/o SONY FUKUSHIMA CORPORATION
Koriyama-shi, Fukushima 963-0531 (JP)**
• **MORIKAWA, Shinichiro,
c/o SONY CORPORATION
Tokyo 141-0001 (JP)**

• **HAYASHI, Naoki, c/o SONY CORPORATION
Tokyo 141-0001 (JP)**
• **HONDA, Kazuo,
c/o SONY FUKUSHIMA CORPORATION
Koriyama-shi, Fukushima 963-0531 (JP)**
• **OYA, Kuniyasu,
c/o SONY FUKUSHIMA CORPORATION
Koriyama-shi, Fukushima 963-0531 (JP)**
• **YAMAMOTO, Kenta, c/o SONY CORPORATION
Tokyo 141-0001 (JP)**
• **KOBAYASHI, Noriyuki,
SONY FUKUSHIMA CORPORATION
Koriyama-shi, Fukushima 963-0531 (JP)**

(74) Representative: **Müller - Hoffmann & Partner
Patentanwälte,
Innere Wiener Strasse 17
81667 München (DE)**

(54) **ALKALINE BATTERY**

(57) The present invention provides an alkaline battery suitable for use as a primary or secondary battery as a power source of electronic appliances. The battery is excellent in discharge characteristics under a heavy load and in cycle characteristics.

The alkaline battery (100) comprises a cathode mix (3) containing β-nickel oxy-hydroxide, an anode mix (5) containing zinc as a main component of anode active material, and an alkali solution as an electrolyte, wherein the cathode mix (3) includes a mixture of β-nickel oxy-hydroxide, graphite powder, and a potassium hydroxide solution in a given weight ratio. The β-nickel oxy-hydroxide is prepared by chemical oxidation and has an approximately spherical shape of particle with a mean particle size in the range of 5 to 50 μm.

FIG. 3

EP 1 445 812 A1

**Description**

**TECHNICAL FIELD**

The present invention relates to an alkaline battery using β-nickel oxy-hydroxide, or β-nickel oxy-hydroxide and manganese dioxide as active material for cathode. In particular, the present invention relates to an alkaline battery using β-nickel oxy-hydroxide having a mean particle size within a given range and obtained by a chemical oxidation method, or such the β-nickel oxy-hydroxide and manganese dioxide having a mean particle size within given range, as active material for the cathode, thereby enabling its discharge characteristics under a heavy load to be made excellent to operate the battery for a long period of time while the battery discharges large electricity. The present invention also relates to an alkaline battery in which a given quantity of a fluorinated resin is added as a binder into a cathode mix containing β-nickel oxy-hydroxide, thereby allowing its cycle characteristic to be made excellent.

**BACKGROUND ART**

Small size portable electronic appliances, for example, portable game machines and digital cameras in particular, have been remarkably spread in recent years. Since these appliances are supposed to be increasingly spread in near future, demands of batteries as power sources of these appliances are expected to be rapidly increased. While AA size cylindrical batteries have been mainly used for these appliances today, the power source should be excellent in discharge characteristics under a heavy load because each of the electronic appliances require a high operation voltage as well as a large electric current.

The most prevailing battery among these batteries satisfying such requirements is an alkaline-manganese battery using manganese dioxide for a cathode and zinc for anode, and a high concentration alkaline solution for an electrolyte. Since both manganese dioxide and zinc in this battery are inexpensive, and the battery has a high energy density per unit weight, it is widely used for the power source of small size portable electronic appliances.

For further improving the discharge characteristics of the alkaline manganese battery under a heavy load in view of the use thereof in these small size electronic appliances, various improvements have been attempted with respect to the materials of the battery and constructions of the battery. However, since discharge of manganese dioxide as the cathode active material depends on a uniform solid phase reaction in this battery system, the voltage is gradually decreased by discharge to give a discharge curve that descends with time.

A small portion of the requirements of the small size portable electronic appliances that require high voltage and large current may be satisfied by the discharge characteristics of the alkaline manganese battery as described above, and the time available for the use of the appliances is still short today even after applying various improvements. In addition, since the small size portable electronic appliances are often operated under a relatively high voltage and large current at the initial stage of debut in the market, a battery that is able to cope with such novel appliances and is excellent in heavy load characteristics becomes essential.

A nickel-zinc battery has been proposed as a battery satisfying such requirements. This battery uses nickel oxy-hydroxide for a cathode and zinc for an anode, and has a higher operation voltage than the alkaline manganese battery in addition to excellent heavy load characteristics. On the contrary, nickel oxy-hydroxide as a cathode active material is liable to generate oxygen while the amount of self-discharge is large.

For solving the problems, Japanese Patent Application Laid-Open Publication No. Hei10-214621 has disclosed, for example, an inside-out structure battery using γ-nickel oxy-hydroxide (γ-NiOOH) that exhibits a less amount of self-discharge for the cathode active material. Alternatively, an inside-out structure battery using β-nickel oxy-hydroxide (β-NiOOH) having a relatively high density for the cathode active material has been also disclosed.

However, although the storage battery composed of γ-nickel oxy-hydroxide exhibits less degree of self-discharge and a higher operation potential than the alkaline manganese battery due to its relatively low density of γ-nickel oxy-hydroxide, it is a problem that the discharge capacity of the battery is substantially small.

While the discharge capacity of the battery composed of β-nickel oxy-hydroxide has been improved since β-nickel oxy-hydroxide has a higher density than γ-nickel oxy-hydroxide, discharge characteristics under a heavy load are left behind yet as a problem to be improved.

Although the inside-out type alkaline battery (for example nickel-zinc battery) has a large discharge capacity, cycle characteristics of the battery is poor since the discharge capacity is largely decreased by repeating charge-discharge cycles, which is a problem.

It is one of the causes of the problem that a cathode active material having a hollow cylindrical shape is swelled by discharge, and the shape does not restore its original shape even by charging. Nickel hydroxide as a product of discharge has a lower density than that of nickel oxy-hydroxide, and has little conductivity. Accordingly, a carbon material having a binding action is added for inproving conductivity of the cathode mix. However, while the carbon conductive material is responsible for binding the cathode mix, its action is so weak that an appropriate binder of the cathode mix is also required.

## DISCLOSURE OF THE INVENTION

The object of the present invention is to provide an alkaline battery having discharge characteristics under a heavy load, which enable the battery to be operated for a long period of time even by discharging a large electricity, and having excellent cycle characteristics.

An alkaline battery relating to the present invention comprises a cathode mix containing β-nickel oxy-hydroxide as a cathode active material, an anode mix containing zinc as a main component of an anode active material, and an alkaline solution as an electrolyte, wherein β-nickel oxy-hydroxide is obtained by chemical oxidation of nickel hydroxide, and wherein the β-nickel oxy-hydroxide has a mean particle size in the range of 5 to 50 μm.

Preferably, the particle of β-nickel oxy-hydroxide is approximately spherical. The term "approximately spherical" is a concept including spherical and approximately spherical. The meaning is the same hereinafter.

β-nickel oxy-hydroxide prepared by chemical oxidation is used as a cathode active material in the present invention. The mean particle size of the β-nickel oxy-hydroxide is preferably in the range of 5 to 50 μm. A large quantity of the active material can be hardly packed in one battery due to a strong repulsive force among the particles in compression molding of the cathode, when the mean particle size of the β-nickel oxy-hydroxide is smaller than 5 μm, to result in a decrease of discharge characteristics under a heavy load. On the other hand, its discharge capacity decreases when the mean particle size of β-nickel oxy-hydroxide is larger than 50 μm also to result in a decrease of discharge characteristics under a heavy load. Accordingly, the alkaline battery excellent in the discharge characteristics under a heavy load may be obtained by restricting the mean particle size of β-nickel oxy-hydroxide in the range of 5 to 50 μm. Note that the β-nickel oxy-hydroxide can be packed in a higher density by forming the β-nickel oxy-hydroxide particles into spherical particles to enable a larger discharge capacity (battery capacity) to be obtained.

In another aspect, an alkaline battery relating to the present invention comprises a cathode mix containing β-nickel oxy-hydroxide and manganese dioxide as cathode active materials, an anode mix mainly comprising zinc as an anode active material, and an alkaline solution as an electrolyte wherein the β-nickel oxy-hydroxide is obtained by chemical oxidation of nickel hydroxide and wherein the β-nickel oxy-hydroxide has a mean particle size in the range of 5 to 50 μm, and wherein the manganese dioxide has a mean particle size in the range of 10 to 70 μm. The particles of β-nickel oxy-hydroxide are approximately spherical.

A cathode active material prepared by mixing β-nickel oxy-hydroxide produced by chemical oxidation and manganese dioxide is used in the present invention. The mean particle size of the β-nickel oxy-hydroxide is in the range of 5 to 50 μm, while the mean particle size of the manganese dioxide is in the range of 10 to 70μm.

Since the repulsive force among the particles is strong in compression molding of the cathode when the particle size distribution of the cathode active material falls in a small particle size range (the mean particle size of the β-nickel oxy-hydroxide is smaller than 5 μm, and the mean particle size of the manganese dioxide is smaller than 10 μm), it is difficult to pack the active material in one battery in a large quantity to decrease the discharge characteristics under a heavy load. On the other hand, the discharge capacity is decreased when the particle size is distributed in a larger range (the mean particle size of the β-nickel oxy-hydroxide is larger than 50 μm, and the mean particle size of the manganese dioxide is larger than 70 μm), and the discharge characteristics under a heavy load are also decreased.

Accordingly, an alkaline battery excellent in the discharge characteristics under a heavy load can be obtained by controlling the mean particle size of β-nickel oxy-hydroxide in the range of 5 to 50 μm, and the mean particle size of manganese dioxide in the range of 10 to 70 μm. The packing capacity of the cathode can be increased without reducing the reaction area between the cathode and anode using a mixture of the β-nickel oxy-hydroxide and the manganese dioxide, and the discharge capacity is increased. Forming the β-nickel oxy-hydroxide into a spherical shape allows the β-nickel oxy-hydroxide to be packed in a high density, thereby enabling a larger discharge capacity (cell capacity) thereof to be obtained. Using the manganese dioxide causes reduction of the production cost.

In a different aspect, an inside-out type alkaline battery relating to the present invention comprises a cathode mix containing β-nickel oxy-hydroxide and a conductive material as a cathode active material, an anode mix containing zinc as a main component of an anode active material, an alkaline solution as an electrolyte, and a separator disposed between a cathode comprising the cathode mix and an anode comprising the anode mix, wherein the β-nickel oxy-hydroxide is obtained by chemical oxidation of nickel hydroxide, and wherein the cathode mix includes a fluorinated resin as a binder.

According to the invention, the β-nickel oxy-hydroxide is used as the cathode active material. While a fluorinated resin such as polytetrafluoroethylene (PTFE), tetrafluoroethylene-hexafluoropropylene copolymer (FEP) or polychlorotrifluoroethylene (PCTFE) is added as a binder in the cathode mix containing the cathode active material, the amount of addition of the fluorinated resin is 0.1 to 1.0% by weight. Conductivity is reduced due to large charge transfer resistance in the cathode when the amount of addition is larger than 1.0% by weight, since the surface of the cathode active material is excessively covered with the binder. When the amount of addition of the binder is less than 1% by weight, on the other hand, the cycle characteristics are deteriorated since the effect of the binder becomes small. Accordingly, swelling of the cathode active material by discharge is suppressed by adding the fluorinated resin in an amount of 0.1 to 1.0% by weight to enable the alkaline battery to exhibit excellent cycle characteristics.

Preferably, a porous metal cylinder is provided between the cathode and the separator. The porous metal cylinder has a thickness of, for example, 50 to 200 μm. The porous metal cylinder is formed of any one of a hollow stainless steel cylinder, as well as a punching metal, a metal net, and an expand metal that are made of nickel, copper or tin. Such configuration permits an alkaline battery having improved cycle characteristics to be obtained, since water formed at the cathode by charging is pushed out to the anode to suppress swelling of the cathode by this water, and water formed at the cathode by charging is efficiently transferred to the anode to suppress deterioration of the capacity by charge-discharge cycles.

**BRIEF DESCRIPTION OF THE DRAWINGS**

Fig. 1 is a diagram for showing a configuration of an alkaline battery in the first embodiment;

Fig. 2 is a diagram for showing the relationship between the mean particle size of β-nickel oxy-hydroxide and discharge time;

Fig. 3 is a diagram for comparing the discharge time depending on the kinds of nickel oxy-hydroxide;

Fig. 4 is a diagram for showing the relationship between the mean particle size of manganese dioxide and discharge time;

Fig. 5 is a diagram for showing the relationship between the cumulative pore volume of β-NiOOH, and the charging time and self-discharge ratio;

Fig. 6 is a diagram for showing the relationship between the cumulative pore volume of β-NiOOH, and the charging time and self-discharge ratio when the proportion of blending of β-NiOOH in the cathode active material is 50% by mass;

Fig. 7 is a diagram for showing the relationship between the cumulative pore volume of β-NiOOH, and the charging time and self-discharge ratio when the proportion of blending of β-NiOOH in the cathode active material is 30% by mass;

Fig. 8 is a diagram for showing the relationship between the cumulative pore volume of β-NiOOH, and the charging time and self-discharge ratio when the proportion of blending of β-NiOOH in the cathode active material is 10% by mass;

Fig. 9 is a diagram for showing the relationship between the sulfuric acid radical content in β-nickel oxy-hydroxide, and the discharge time and self-discharge ratio under heavy load discharge;

Fig. 10 is a diagram for showing the relationship between the sulfuric acid radical content in β-nickel oxy-hydroxide, and the discharge time and self-discharge ratio under light load discharge;

Fig. 11 is a diagram for showing the relationship between the sulfuric acid radical content in β-nickel oxy-hydroxide, and the discharge time and self-discharge ratio under heavy load discharge when the blend ratio of β-nickel oxy-hydroxide is 50%;

Fig. 12 is a diagram for showing the relationship between the sulfuric acid radical content in β-nickel oxy-hydroxide, and the discharge time and self-discharge ratio under light load discharge when the blend ratio of β-nickel oxy-hydroxide is 50%;

Fig. 13 is a diagram for showing the relationship between the amount of addition of PTFE, and the discharge capacity and charge transfer resistance;

Fig. 14 is a diagram for showing the relationship between the amount of addition of FEP, and the discharge capacity and charge transfer resistance;

Fig. 15 is a diagram for showing the relationship between the amount of addition of PCTFE, and the discharge capacity and charge transfer resistance;

Fig. 16 is a diagram for showing a configuration of an alkaline battery in the fifth embodiment;

Fig. 17 is a diagram for showing the relationship between thickness of the porous metal cylinder and capacity retention ratio; and

Fig. 18 is a diagram for showing the relationship between kinds of the metal and capacity retention ratio.

**BEST MODE FOR CARRYING OUT THE INVENTION**

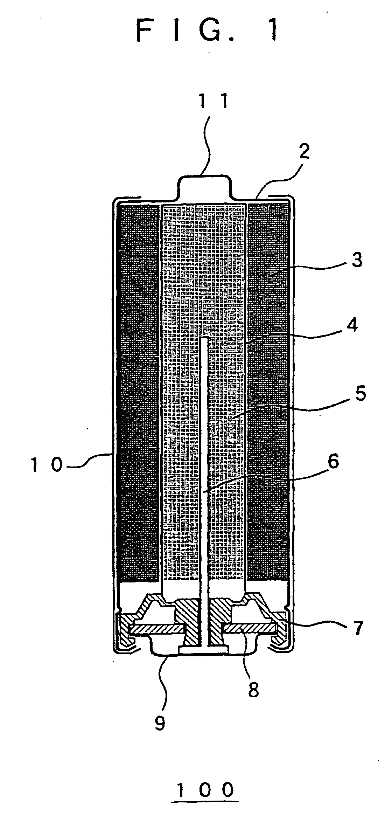

A first embodiment of the present invention will be described hereinafter. Fig. 1 shows a configuration of the alkaline battery 100 in the first embodiment. Approximately spherical β-nickel oxy-hydroxide particles prepared by chemical oxidation are used for a cathode active material in the alkaline battery 100.

The alkaline battery 100 comprises a battery can 2, a cathode mix 3, a separator 4, an anode mix 5, a current collector pin 6, a gasket 7, a neutral cover 8 and a negative terminal 9.

The battery can 2 is formed, for example, by presswork of a metal plate subjected to nickel plating. The battery can 2 also serves as a positive terminal of the alkaline battery 100.

The cathode mix 3 is formed into a hollow cylinder, and is placed within the battery can 2. For producing the cathode mix 3, β-nickel oxy-hydroxide as a cathode active material, a carbon powder as a conductive material, and an alkaline solution as an electrolyte are mixed together, and the mixture is molded into the hollow cylinder. A graphite powder is used for the carbon powder used as the conductive material. While potassium hydroxide solution is used for the alkaline solution, lithium hydroxide solution or sodium hydroxide solution, or a mixture of them may be used.

The cathode mix 3 is prepared as follows. First, β-nickel oxy-hydroxide, the graphite powder, and a 40% KOH solution are weighed in a proportion of 10:1:1, and they are mixed under a stirring method such as the one using an impeller or a ball mill. Then, the mixed material is then press-molded into a hollow cylinder, thereby obtaining the cathode mix 3.

The separator 4 has a bottom-sealed cylinder shape, and is disposed at the inside of the cathode mix 3. For example, as the separator 4, a synthetic fiber nonwoven fabric having good liquid absorbing and retaining property and being excellent in alkali resistance is used.

The anode mix 5 is a gel, and is filled in the separator 4. The anode mix 5 is prepared by uniformly dispersing and mixing particles of zinc and zinc oxide as anode active materials in the potassium hydroxide solution as the electrolyte using a gelling agent.

An opening of the battery can 2 is hermetically sealed with the gasket 7 as an insulator, the neutral cover 8, and the negative terminal 9. The current collector pin 6 made of a metal is welded to the negative terminal 9.

The alkaline battery 100 shown in Fig. 1 is produced as follows. The cathode mix 3 formed into a cylinder by compression molding is inserted into the battery can 2. Then, the separator 4 of the bottom-sealed cylinder is inserted at the center of the cathode mix 3, and a gel of the anode mix 5 is filled into the separator 4. Finally, the insulator gasket 7, the neutral cover 8, and the negative terminal 9 are inserted into the battery can 2, and an edge of the opening of the battery can 2 is folded to the inside to fix the gasket 7. The current collector pin 6 welded to the negative terminal 9 is inserted into the gel of the anode mix 5 when the gasket 7 and the like are inserted into the battery can 2.

Current collection of the anode in the alkaline battery 100 shown in Fig. 1 is ensured by inserting the current collector pin 6 welded to the negative terminal 9 into the anode mix 5. Current collection of the cathode is also ensured by connecting the cathode mix 3 to the battery can 2. The outer circumference surface of the battery can 2 is covered with an external label 10, and the positive terminal 11 is located at the projection (the top of the alkaline battery 100 in the drawing) at the bottom of the battery can 2.

β-nickel oxy-hydroxide as the cathode active material in this embodiment will be further described hereinafter.

The β-nickel oxy-hydroxide is produced by chemical oxidation of nickel hydroxide. For example, it is produced by oxidizing nickel hydroxide in a liquid phase containing an appropriate oxidizing agent such as sodium hypochlorite and an appropriate alkali species such as lithium hydroxide, sodium hydroxide and potassium hydroxide. The oxidation reaction is as follows:

$$2Ni(OH)_2 + ClO^- \rightarrow 2NiCOH + Cl^- + H_2O$$

By forming the β-nickel oxy-hydroxide by chemical oxidation as described above, impurity ions such as $NO_3^-$ and $CO_3^{2-}$ flow out into the liquid phase and are eliminated from the crystal to a certain extent during the reaction process. Consequently, β-nickel oxy-hydroxide exhibiting small amount of self-discharge, particularly β-nickel oxy-hydroxide more suitable for the active material of a primary battery, may be obtained. Self-discharge of the β-nickel oxy-hydroxide is considered to occur by decomposition of the impurity ions such as $NO_3^-$ and $CO_3^{2-}$ contained in the crystal within the battery.

The crystal structure of nickel oxy-hydroxide formed is different depending on the pH in the liquid phase. High-density β-nickel oxy-hydroxide (theoretical density: 4.68 $g/cm^3$) is formed at a pH lower than a given value, while low-density γ-nickel oxy-hydroxide (theoretical density: 3.79 $g/cm^3$) is formed at a pH higher than the given value above.

High-density nickel hydroxide having an approximately spherical shape of particle is used as nickel hydroxide as a starting material. As a result thereof, β-nickel oxy-hydroxide as the cathode active material in this embodiment has an approximately spherical shape of particle.

While usual nickel hydroxide is not spherical with a tap density of 1.4 to 1.8 $g/cm^3$ and bulk density of 1.0 to 1.4 $g/cm^3$, so-called high-density nickel hydroxide has approximately spherical particle with a tap density of 2.0 to 2.5 $g/cm^3$ and bulk density of 1.4 to 1.8 $g/cm^3$ that are higher than usual nickel hydroxide.

The tap density and the bulk density (also referred to as "powder density") are measured as follows. The powder to be measured is filled by spontaneous falling in a specified vessel, the tap density and bulk density are

5

calculated by the following equations

$$\text{bulk density} = A/B \ (g/cm^3)$$

$$\text{tap density} = A/C \ (g/cm^3)$$

wherein the initial mass is represented by A (g), the initial volume is represented by B (cm$^3$), and the volume after raising the vessel and lightly tapping the bottle thereof onto a desk or the like at 200 times is represented by C (cm$^3$).

The tap density and bulk density of the β-nickel oxy-hydroxide as the cathode active material in this embodiment desirably falls within the following ranges. Namely, the tap density of the β-nickel oxy-hydroxide desirably falls within the ranges of 2.2 to 2.7 g/cm$^3$. The bulk density of the β-nickel oxy-hydroxide desirably falls within the ranges of 1.6 to 2.2 g/cm$^3$. This is because it is difficult to increase the discharge capacity when the tap density and the bulk density are smaller than the lower limits of the ranges described above. This is also because it is difficult to produce the β-nickel oxy-hydroxide having the tap density and the bulk density larger than the upper limits of the ranges described above.

A discharge time of the alkaline battery 100 after production shown in Fig. 1 was measured with a constant discharge power of 1.5 W under an atmosphere at 20°C as a discharge condition until the final discharge voltage reaches 1.0 V.

Alkaline batteries in Examples 1 to 22 in the first embodiment, and alkaline batteries in Comparative Examples 1 to 4 were measured therein.

β-nickel oxy-hydroxide used in the cathode mix 3 in each of the Examples 1 to 22 is produced by chemical oxidation, and the mean particle size of the approximately spherical particles was changed in the range of 1 to 70 μm so that the batteries were produced according to the manufacturing procedure of the alkaline battery described above. The β-nickel oxy-hydroxide having a particle size distribution range of ±20 μm as a center of a mean particle size value was used in this embodiment.

The batteries in Comparative Examples 1 to 4 were produced by the same method as in Examples 1 to 22, except that γ-nickel oxy-hydroxide produced by chemical oxidation was used for the cathode mix 3, and the mean particle size was changed in the range of 5 to 50 μm.

The results of the measurements in Examples 1 to 22 and Comparative Examples 1 to 4 measured under the conditions above are shown in Table 1.

Table 1

| | Crystal structure | Mean particle size of β-NiOOH (μm) | Discharge time immediately after preparation* (min) |
|---|---|---|---|
| Example 1 | β-NiOOH | 1 | 12 |
| Example 2 | | 2 | 14 |
| Example 3 | | 3 | 20 |
| Example 4 | | 4 | 24 |
| Example 5 | | 5 | 45 |
| Example 6 | | 6 | 48 |
| Example 7 | | 7 | 49 |
| Example 8 | | 8 | 52 |
| Example 9 | | 9 | 52 |
| Example 10 | | 10 | 52 |
| Example 11 | | 11 | 52 |
| Example 12 | | 12 | 52 |
| Example 13 | | 20 | 53 |
| Example 14 | | 30 | 53 |
| Example 15 | | 40 | 53 |
| Example 16 | | 45 | 53 |
| Example 17 | | 48 | 54 |
| Example 18 | | 50 | 54 |
| Example 19 | | 52 | 30 |
| Example 20 | | 55 | 26 |
| Example 21 | | 60 | 22 |
| Example 22 | | 70 | 18 |
| Comparative Example 1 | γ-NiOOH | 5 | 30 |
| Comparative Example 2 | | 20 | 32 |
| Comparative Example 3 | | 35 | 32 |
| Comparative Example 4 | | 50 | 34 |

* Discharge oendition: tenperature at 20°C, constant discharge power of 1.5 W, and discharge termination voltage at 1.0 V

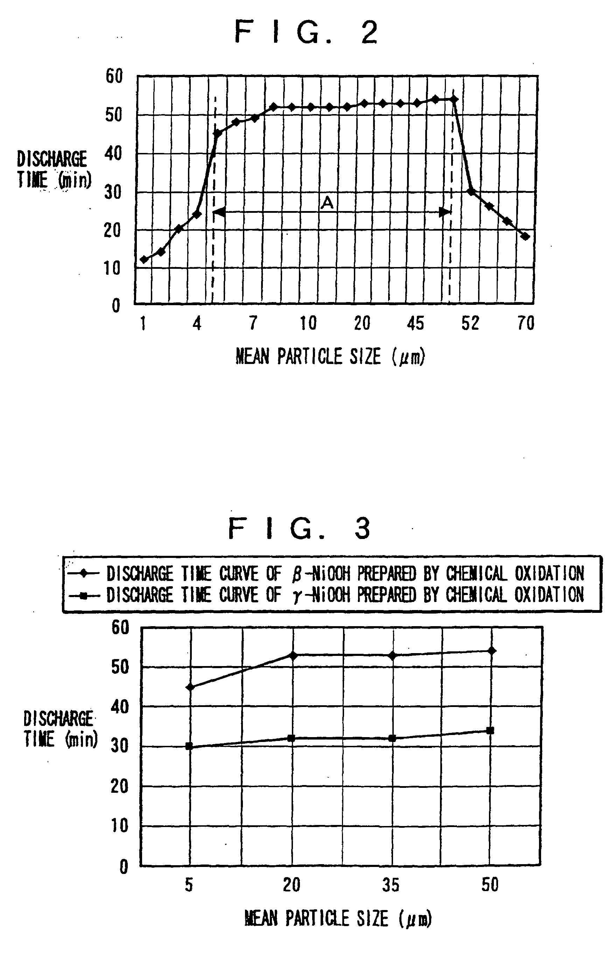

The correlation curves between the mean particle size of β-nickel oxy-hydroxide produced by chemical oxidation and the discharge time as shown in Fig. 2 is obtained from the results of the measurements in Table 1. Fig. 2 shows that the mean particle size of the β-nickel oxy-hydroxide that enables the discharge time of the battery to be prolonged is in the range A in the diagram, or in the range of 5 to 50 μm. Accordingly, a large quantity of the active material can be hardly packed in one battery due to a strong repulsive force among the particles in compression molding of the cathode, when the mean particle size of the β-nickel oxy-hydroxide exceeds 50 μm, to result in a shortness of discharge time and a deterioration of the discharge characteristics under a heavy load. The discharge characteristics under a heavy load are also deteriorated with a small discharge capacity when the mean particle size thereof is less than 5 μm.

Comparative results of the discharge times of the batteries produced using different kinds of nickel oxy-hydroxide are shown in Fig. 3 based on the results of the measurements in Table 1.

Fig. 3 shows a comparison between the discharge times immediately after the production thereof when β-nickel oxy-hydroxide and γ-nickel oxy-hydroxide are used as the cathode active materials. As shown in Fig. 3, the discharge time of the battery comprising γ-nickel oxy-hydroxide produced by chemical oxidation is shorter than the discharge time of the battery comprising β-nickel oxy-hydroxide. This may be comprehended that the discharge capacity of the battery is decreased due to a small packing capacity of the γ-nickel oxy-hydroxide in a given volume of the cathode of the battery since the density of γ-nickel oxy-hydroxide is low.

Accordingly, an alkaline battery having excellent discharge characteristics under a heavy load can be obtained by using β-nickel oxy-hydroxide that is produced as the cathode active material by chemical oxidation and has a mean particle size in the range of 5 to 50 μm. The density of β-nickel oxy-hydroxide is more increased by forming β-nickel oxy-hydroxide particles into an approximately spherical shape to enable a larger discharge capacity (battery capacity) to be obtained.

While the discharge capacity is decreased when the β-nickel oxy-hydroxide particles are not spherical, this may be conjectured to be the effect of the specific particle size distribution as described above.

Subsequently, the alkaline batteries in Examples 23 to 122 in the first embodiment were investigated.

The cathode mix 3 in each of the alkaline batteries in Examples 23 to 122 is prepared by mixing approximately spherical β-nickel oxy-hydroxide prepared by chemical oxidation and manganese dioxide as cathode active materials, a carbon powder as a conductive material, and an alkaline solution as an electrolyte, followed by molding the mixture into a hollow cylinder. The other configuration and manufacturing method are the same as the alkaline battery 100 shown in Fig. 1.

The characteristics of the alkaline batteries in Examples 23 to 122 were evaluated under the test conditions as described above.

β-nickel oxy-hydroxide used in the cathode mix 3 in each of the Examples 23 to 62 was produced by chemical oxidation with its particles having an approximately spherical shape, and the mean particle size thereof being changed in the range of 5 to 50 μm. Further, the manganese dioxide was used with its articles having a mean particle size in the range of 8 to 80 μm. The blend ratio of β-nickel oxy-hydroxide and manganese dioxide was 30% by mass relative to the total amount of the cathode active material. The other specifications were the same as those in Examples 1 to 22, and the batteries were produced by the same procedure as described above.

The results of the measurements in Examples 23 to 62 obtained under the test conditions above are shown in Table 2.

Table 2

| | Blend ratio of β-NiOOH (% by mass) | Mean particle size (μm) of $MnO_2$ | Mean particle size (μm) of β-NiOOH | Discharge time immediately after preparation* (min) |
|---|---|---|---|---|
| Example 23 | 30% | 8 | 5 | 18 |
| Example 24 | | | 20 | 20 |
| Example 25 | | | 35 | 21 |
| Example 26 | | | 50 | 22 |
| Example 27 | | 9 | 5 | 32 |
| Example 28 | | | 20 | 33 |
| Example 29 | | | 35 | 34 |
| Example 30 | | | 50 | 34 |
| Example 31 | | 10 | 5 | 45 |
| Example 32 | | | 20 | 46 |
| Example 33 | | | 35 | 47 |
| Example 34 | | | 50 | 47 |
| Example 35 | | 20 | 5 | 47 |
| Example 36 | | | 20 | 47 |
| Example 37 | | | 35 | 48 |
| Example 38 | | | 50 | 48 |
| Example 39 | | 40 | 5 | 48 |
| Example 40 | | | 20 | 48 |
| Example 41 | | | 35 | 48 |
| Example 42 | | | 50 | 48 |
| Example 43 | | 60 | 5 | 48 |
| Example 44 | | | 20 | 48 |
| Example 45 | | | 35 | 48 |
| Example 46 | | | 50 | 48 |
| Example 47 | | 70 | 5 | 46 |
| Example 48 | | | 20 | 47 |
| Example 49 | | | 35 | 47 |
| Example 50 | | | 50 | 47 |
| Example 51 | | 72 | 5 | 33 |
| Example 52 | | | 20 | 35 |
| Example 53 | | | 35 | 35 |
| Example 54 | | | 50 | 34 |
| Example 55 | | 75 | 5 | 19 |
| Example 56 | | | 20 | 20 |
| Example 57 | | | 35 | 21 |
| Example 58 | | | 50 | 20 |
| Example 59 | | 80 | 5 | 15 |
| Example 60 | | | 20 | 16 |
| Example 61 | | | 35 | 16 |
| Example 62 | | | 50 | 16 |

• Discharge condition: temperature at 20°C, constant discharge power of 1.5 W, and discharge termination voltage at 1.0 V

In Examples 63 to 92, the batteries were manufactured by the same specification and manufacturing procedure as in Examples 23 to 62 except that the proportion of β-nickel oxy-hydroxide in the total amount of the cathode active material is controlled to be 50% by mass.

The results of the measurements measured under the test conditions above in Examples 63 to 92 are shown in Table 3.

Table 3

| | Blend ratio of β-NiOOH (% by mass) | Mean particle size (μm) of $MnO_2$ | Mean particle size (μm) of β-NiOOH | Discharge time immediately after preparation[*] (min) |
|---|---|---|---|---|
| Example 63 | 50% | 8 | 5 | 26 |
| Example 64 | | | 25 | 26 |
| Example 65 | | | 50 | 27 |
| Example 66 | | 9 | 5 | 38 |
| Example 67 | | | 25 | 38 |
| Example 68 | | | 50 | 39 |
| Example 69 | | 10 | 5 | 50 |
| Example 70 | | | 25 | 51 |
| Example 71 | | | 50 | 51 |
| Example 72 | | 20 | 5 | 52 |
| Example 73 | | | 25 | 52 |
| Example 74 | | | 50 | 52 |
| Example 75 | | 40 | 5 | 52 |
| Example 76 | | | 25 | 52 |
| Example 77 | | | 50 | 52 |
| Example 78 | | 60 | 5 | 52 |
| Example 79 | | | 25 | 52 |
| Example 80 | | | 50 | 53 |
| Example 81 | | 70 | 5 | 53 |
| Example 82 | | | 25 | 53 |
| Example 83 | | | 50 | 53 |
| Example 84 | | 72 | 5 | 36 |
| Example 85 | | | 25 | 36 |
| Example 86 | | | 50 | 37 |
| Example 87 | | 75 | 5 | 27 |
| Example 88 | | | 25 | 27 |
| Example 89 | | | 50 | 26 |
| Example 90 | | 80 | 5 | 18 |
| Example 91 | | | 25 | 18 |
| Example 92 | | | 50 | 17 |

• Discharge condition: temperature at 20°C, constant discharge power of 1.5 W, and discharge termination voltage at 1.0 V

In Examples 93 to 122, the batteries were manufactured by the same specification and manufacturing procedure as in Examples 23 to 62 except that the proportion of β-nickel oxy-hydroxide in the total amount of the cathode active material is controlled to be 10% by mass.

The results of the measurements measured under the test conditions above in Examples 93 to 122 are shown in Table 4.

Table 4

|  | Blend ratio of β-NiOOH (% by mass) | Mean particle size (μm) of $MnO_2$ | Mean particle size (μm) of β-NiOOH | Discharge time immediately after preparation* (min) |
|---|---|---|---|---|
| Example 93 | 10% | 8 | 5 | 11 |
| Example 94 |  |  | 25 | 11 |
| Example 95 |  |  | 50 | 11 |
| Example 96 |  | 9 | 5 | 15 |
| Example 97 |  |  | 25 | 16 |
| Example 98 |  |  | 50 | 16 |
| Example 99 |  | 10 | 5 | 27 |
| Example 100 |  |  | 25 | 28 |
| Example 101 |  |  | 50 | 28 |
| Example 102 |  | 20 | 5 | 29 |
| Example 103 |  |  | 25 | 29 |
| Example 104 |  |  | 50 | 29 |
| Example 105 |  | 40 | 5 | 30 |
| Example 106 |  |  | 25 | 30 |
| Example 107 |  |  | 50 | 30 |
| Example 108 |  | 60 | 5 | 30 |
| Example 109 |  |  | 25 | 30 |
| Example 110 |  |  | 50 | 30 |
| Example 111 |  | 70 | 5 | 31 |
| Example 112 |  |  | 25 | 31 |
| Example 113 |  |  | 50 | 31 |
| Example 114 |  | 72 | 5 | 18 |
| Example 115 |  |  | 25 | 17 |
| Example 116 |  |  | 50 | 17 |
| Example 117 |  | 75 | 5 | 14 |
| Example 118 |  |  | 25 | 14 |
| Example 119 |  |  | 50 | 13 |
| Example 120 |  | 80 | 5 | 12 |
| Example 121 |  |  | 25 | 12 |
| Example 122 |  |  | 50 | 12 |

• Discharge condition: temperature at 20°C, constant discharge power of 1.5 W, and discharge termination voltage at 1.0 V

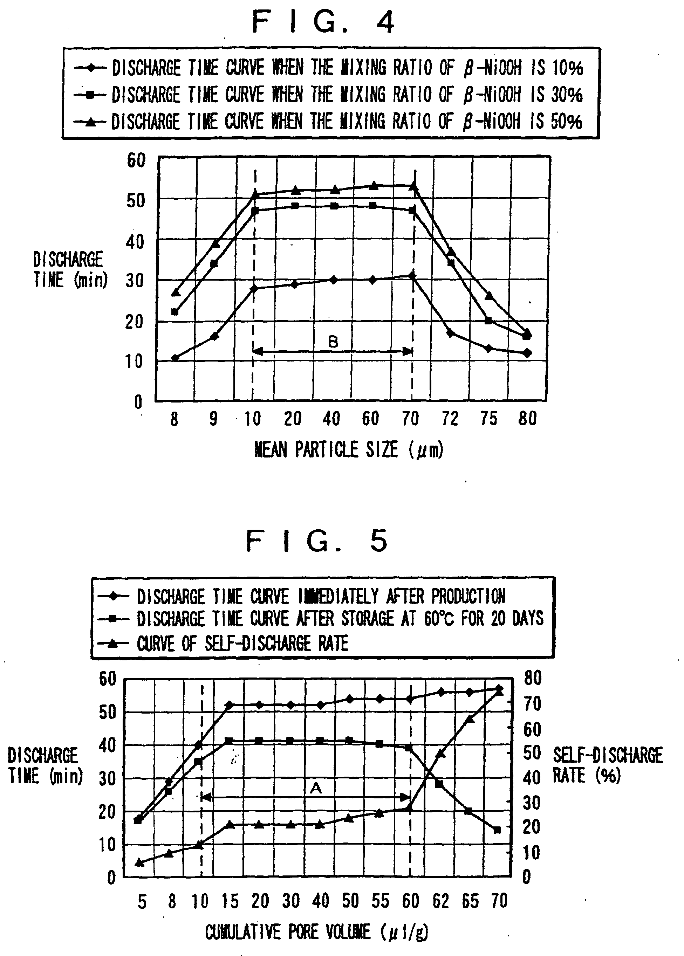

Correlation curves between the mean particle size of manganese dioxide and the discharge time, as shown in Fig. 4, are obtained on the basis of the results of the measurements in Tables 2 to 4. The blend proportions of β-nickel oxy-hydroxide in the cathode active material were 50, 30 and 10% by mass, respectively and the mean particle size thereof was 50 μm. Fig. 5 shows that the mean particle size of manganese dioxide that prolongs the discharge time is in the range B in the diagram, or in the range of 10 to 70μm. Thus, a large quantity of the active material can be hardly packed in one battery due to a strong repulsive force among the particles in compression molding of the cathode, when the mean particle size of the manganese dioxide exceeds 70 μm, to result in a shortness of discharge time and a deterioration of the discharge characteristics under a heavy load. The discharge characteristics under a heavy load are also deteriorated with a small discharge capacity when the mean particle size thereof is less than 10 μm.

While the results when the mean particle size of the β-nickel oxy-hydroxide is 50 μm are shown in Fig. 4, the same results are obtained in other examples in which the mean particle size of the β-nickel oxy-hydroxide is in the range of 5 to 50 μm.

It was confirmed from Fig. 4 that the discharge time is longer when the blend ratio of β-nickel oxy-hydroxide is 50% by mass than when the blend ratio of β-nickel oxy-hydroxide is 30% and 10% by mass.

An alkaline battery using a mixture of β-nickel oxy-hydroxide prepared by chemical oxidation and manganese dioxide as the cathode active materials, by adjusting the mean particle size of the β-nickel oxy-hydroxide particles in the range of 5 to 50 μm, and by adjusting the mean particle size of the manganese dioxide particles in the range of 10 to 70 μm allows its discharge characteristics under a heavy load to be excellent. It is also possible to increase the packing capacity of the cathode without decreasing any reaction areas of the cathode/anode by using a mixture of β-nickel oxy-hydroxide and manganese dioxide as the cathode active material. Reduction of the production cost of the battery is also possible by using inexpensive manganese dioxide. Since the β-nickel oxy-hydroxide particles are formed into approximately spherical, the β-nickel oxy-hydroxide can be packed in a higher density to enable a larger discharge capacity (battery capacity) to be obtained.

The second embodiment of the present invention will be described hereinafter.

The configuration of the alkaline battery in the second embodiment is the same as the configuration of the alkaline battery 100 in the first embodiment (see Fig. 1).

The alkaline batteries in Examples 1 to 13 in the second embodiment are described below.

The alkaline batteries in Examples 1 to 13 were produced according to the above manufacturing procedure of the alkaline battery 100 using β-nickel oxy-hydroxide prepared by chemical oxidation for the cathode mix 3 with its particles having approximately spherical shape and cumulative pore volume in connection with pore sizes of not larger than 0.5 μm in the particles thereof being changed in the range of 5 to 70 μl/g.

Characteristics of the alkaline batteries in Examples 1 to 13 were evaluated under two test conditions. In condition 1, the discharge time was measured until the discharge termination voltage reaches 1.0 V with a constant discharge power of 1.5 W at the ambient temperature of 20°C immediately after producing the battery. In condition 2, the battery was stored at the ambient temperature of 60°C for 20 days and, after resuming the temperature at 20°C, the discharge time was measured until the discharge termination voltage reaches 1.0 V with a constant discharge power of 1.5 W.

The results obtained in Examples 1 to 13 under these two conditions are shown in Table 5.

Table 5

| | Cathode active material | cumulative pore volume in connection with pore sizes of not larger than 0.5 μm (μl/g) | Discharge time* | | Self-discharge ratio (%) |
|---|---|---|---|---|---|
| | | | Immediately after production (min) | After storage for 20 days at 60°C (min) | |
| Example 1 | β-NiOOH | 5 | 18 | 17 | 6 |
| Example 2 | | 8 | 29 | 26 | 10 |
| Example 3 | | 10 | 40 | 35 | 13 |
| Example 4 | | 15 | 52 | 41 | 21 |
| Example 5 | | 20 | 52 | 41 | 21 |
| Example 6 | | 30 | 52 | 41 | 21 |
| Example 7 | | 40 | 52 | 41 | 21 |
| Example 8 | | 50 | 54 | 41 | 24 |
| Example 9 | | 55 | 54 | 40 | 26 |
| Example 10 | | 60 | 54 | 39 | 28 |
| Example 11 | | 62 | 56 | 28 | 50 |
| Example 12 | | 65 | 56 | 20 | 64 |
| Example 13 | | 70 | 57 | 14 | 75 |

* Discharge condition: temperature at 20°C, constant discharge power of 1.5W, and discharge termination voltage at 1.0 V

Correlation curves in Fig. 5 between the cumulative pore volume of β-nickel oxy-hydroxide prepared by chemical oxidation, and the discharge time and self-discharge ratio are obtained from the results of the measurements in Table 5. The cumulative pore volume in connection with of pore size of 0.5 μm or less in the β-nickel oxy-hydroxide particles, which permits the discharge time to be prolonged and the self-discharge ratio to be low, is within the range A, or within the range of 10 to 60 μl/g. While the battery has excellent discharge characteristics under a heavy load when the cumulative pore volume in connection with of pore size of 0.5 μm or less in the β-nickel oxy-hydroxide particles exceeds 60 μl/g, storage characteristics are largely decreased due to considerable increase of the self-discharge ratio. While the storage characteristics are improved (low self-discharge ratio) when the volume is less than 10 μl/g, the discharge characteristics under a heavy load are also largely decreased.

An alkaline battery using, as the cathode active material, β-nickel oxy-hydroxide that is prepared by chemical oxidation and has a cumulative pore volume in connection with the pore sizes of 0.5 μm or less in the particles in the range of 10 to 60 μl/g allows its discharge characteristics under a heavy load and storage characteristics to be excellent. Since the particles of β-nickel oxy-hydroxide are approximately spherical, the β-nickel oxy-hydroxide may have a higher density to enable a larger discharge capacity (battery capacity) to be obtained.

Alkaline batteries in Examples 14 to 52 in the second embodiment will be described hereinafter.

The cathode mix 3 in each of the alkaline batteries in Examples 14 to 52 comprises approximately spherical β-nickel oxy-hydroxide particles prepared by chemical oxidation and manganese dioxide as cathode active materials, carbon powder as a conductive material, and an alkaline solution as an electrolyte, which materials are mixed, and molded into a hollow cylinder. The other configuration and production procedure are the same as in the alkaline batteries in Examples 1 to 13.

A mixture of β-nickel oxy-hydroxide and manganese dioxide was used as the cathode mix 3 in Examples 14 to 52. The cumulative pore volume in connection with pore size of 0.5 μm or less in the β-nickel oxy-hydroxide particles was changed in the range of 5 to 70 μl/g. Approximately spherical β-nickel oxy-hydroxide produced by chemical oxidation was used in the mixture. The blend ratio of β-nickel oxy-hydroxide and manganese dioxide to the total amount of the cathode active material was 50% by mass in Examples 14 to 26, 30% in Examples 27 to 39, and 10% in Examples 40 to 52, respectively. The batteries were prepared by the same specification as in Examples 1 to 13 according to the production procedure as described above.

The characteristics of the alkaline batteries in Examples 14 to 52 were evaluated under the two conditions described above. The results of the measurements under the test conditions in Examples 14 to 52 are shown in Table 6.

Table 6

| | Blend ratio of β-NiOOH (% by mass) | cumulative pore volume in connection with pore sizes of not larger than 0.5 μm (μl/g) | Discharge time* | | Self-discharge ratio |
|---|---|---|---|---|---|
| | | | Immediately after production (min) | After storage for 20 days at 60°C (min) | |
| Example 14 | 50% | 5 | 16 | 14 | 13 |
| Example 15 | | 8 | 28 | 24 | 14 |
| Example 16 | | 10 | 46 | 38 | 17 |
| Example 17 | | 15 | 48 | 40 | 17 |
| Example 18 | | 20 | 50 | 40 | 20 |
| Example 19 | | 30 | 50 | 40 | 20 |
| Example 20 | | 40 | 50 | 40 | 20 |
| Example 21 | | 50 | 50 | 40 | 20 |
| Example 22 | | 55 | 52 | 40 | 23 |
| Example 23 | | 60 | 52 | 40 | 23 |
| Example 24 | | 62 | 54 | 25 | 54 |
| Example 25 | | 65 | 54 | 18 | 67 |
| Example 26 | | 70 | 56 | 12 | 79 |
| Example 27 | 30% | 5 | 14 | 12 | 14 |
| Example 28 | | 8 | 28 | 24 | 14 |
| Example 29 | | 10 | 42 | 35 | 17 |
| Example 30 | | 15 | 44 | 36 | 18 |
| Example 31 | | 20 | 46 | 36 | 22 |
| Example 32 | | 30 | 47 | 36 | 23 |
| Example 33 | | 40 | 47 | 36 | 23 |
| Example 34 | | 50 | 47 | 36 | 23 |
| Example 35 | | 55 | 47 | 36 | 23 |
| Example 36 | | 60 | 47 | 36 | 23 |
| Example 37 | | 62 | 48 | 26 | 46 |
| Example 38 | | 65 | 48 | 22 | 54 |
| Example 39 | | 70 | 49 | 15 | 69 |

• Discharge condition: temperature at 20°C, constant discharge power of 1.5 W, and discharge termination voltage at 1.0 V

Table 6   (continued)

| | Blend ratio of β-NiOOH (% by mass) | cumulative pore volume in connection with pore sizes of not larger than 0.5 μm (μl/g) | Discharge time[*] | | Self-discharge ratio |
|---|---|---|---|---|---|
| | | | Immediately after production (min) | After storage for 20 days at 60°C (min) | |
| Example 40 | 10% | 5 | 5 | 4.5 | 10 |
| Example 41 | | 8 | 16 | 13 | 19 |
| Example 42 | | 10 | 23 | 18 | 22 |
| Example 43 | | 15 | 25 | 19 | 24 |
| Example 44 | | 20 | 27 | 20 | 26 |
| Example 45 | | 30 | 27 | 20 | 26 |
| Example 46 | | 40 | 27 | 20 | 26 |
| Example 47 | | 50 | 27 | 20 | 26 |
| Example 48 | | 55 | 27 | 20 | 26 |
| Example 49 | | 60 | 28 | 20 | 29 |
| Example 50 | | 62 | 29 | 14 | 52 |
| Example 51 | | 65 | 30 | 10 | 67 |
| Example 52 | | 70 | 30 | 6 | 80 |

• Discharge condition: temperature at 20°C, constant discharge power of 1.5 W, and discharge termination voltage at 1.0 V

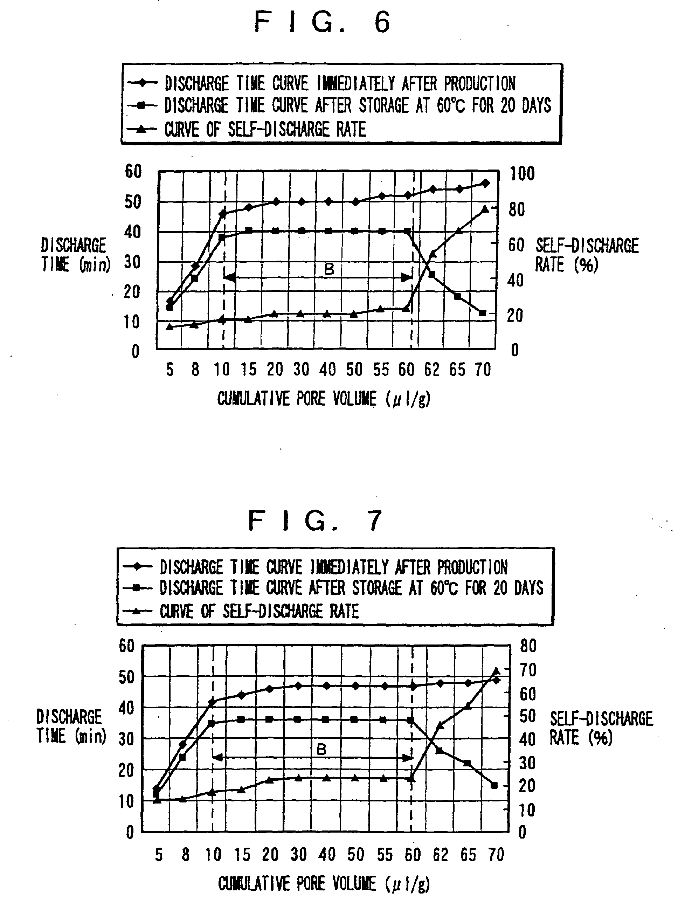

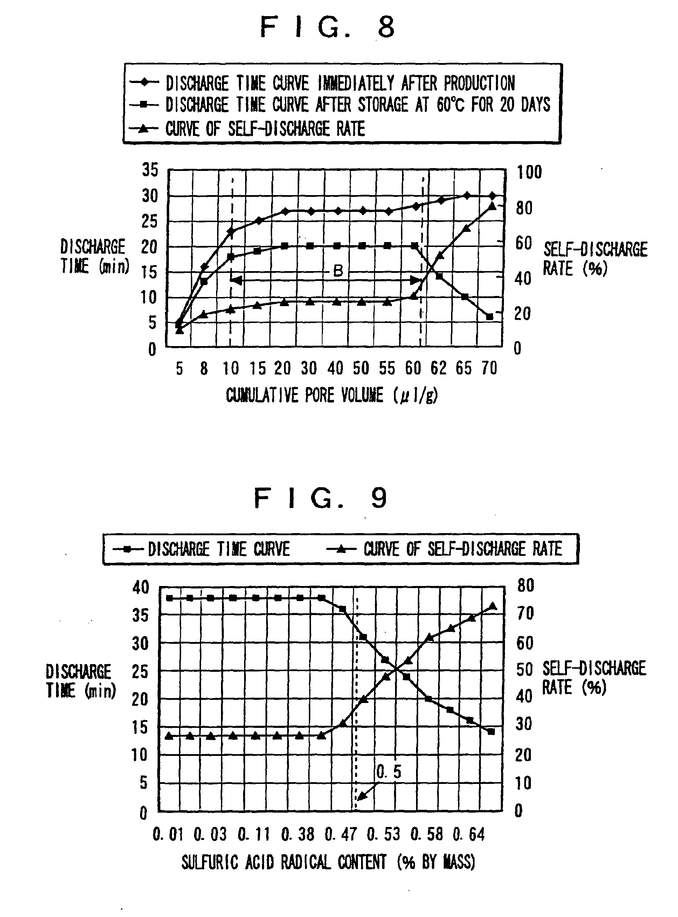

Correlation curves in Figs. 6 to 8 between the cumulative pore volume in connection with pore size of 0.5 μ or less in mixed particles of β-nickel oxy-hydroxide and manganese dioxide, and the discharge time and self-discharge ratio in Figs. 6 to 8 are obtained from the results of the measurements in Table 6. Fig. 6 shows the relationship between the cumulative pore volume, and the discharge time and self-discharge ratio when the blend ratio of β-nickel oxy-hydroxide in the cathode active material is 50% by mass. Fig. 7 shows the relationship between the cumulative pore volume, and the discharge time and self-discharge ratio when the blend ratio of β-nickel oxy-hydroxide in the cathode active material is 30% by mass. Fig. 8 shows the relationship between the cumulative pore volume, and the discharge time and self-discharge ratio when the blend ratio of β-nickel oxy-hydroxide in the cathode active material is 10% by mass.

Figs. 6 to 8 show that the cumulative pore volume in connection with pore sizes of 0.5 μm or less in the mixed particles of β-nickel oxy-hydroxide and manganese dioxide, which permits the discharge time of the battery to be prolonged and the self-discharge ratio to be low, is within the range B in the diagram, or within the range of 10 to 60 μl/g. While the discharge characteristics under a heavy load are excellent when the cumulative pore volume in connection with pore sizes of 0.5 μm or less in the particles exceeds 60 μl/g as in the case using only β-nickel oxy-hydroxide as the cathode active material in Fig. 5, the storage characteristics are considerably decreased due to a large increase of the self-discharge ratio. While the storage characteristics are improved (low self-discharge ratio) when the fine volume is less than 10 μl/g, the discharge characteristics under a heavy load are largely decreased.

Accordingly, an alkaline battery using the cathode active material comprising a mixture of β-nickel oxy-hydroxide produced by chemical oxidation and manganese dioxide, and by controlling the cumulative pore volume in connection with pore size of 0.5 μm or less in the mixed particles of β-nickel oxy-hydroxide and manganese dioxide in the range of 10 to 60 μl/g allows its discharge characteristics under a heavy load and storage characteristics to be excellent. The packing capacity of the cathode can be increased without decreasing the reaction areas of the cathode/ anode while the discharge capacity is increased, by using a mixture of β-nickel oxy-hydroxide and manganese dioxide as the cathode active materials. The production cost of the battery can be reduced using inexpensive manganese dioxide. The approximately spherical β-nickel oxy-hydroxide particles permit β-nickel oxy-hydroxide to have a high density, thereby permitting a larger discharge capacity (battery capacity) to be obtained.

The third embodiment of the present invention will be described hereinafter.

The configuration of the alkaline battery in the third embodiment is the same as the configuration of the alkaline battery 100 in the first embodiment (see Fig. 1).

The alkaline batteries in Examples 1 to 16 in the third embodiment will be described below.

In Examples 1 to 16 of this embodiment, the batteries were respectively produced according to the same production procedure of the alkaline battery 100 described above using, as $\beta$-nickel oxy-hydroxide to be used in cathode mix 3, $\beta$-nickel oxy-hydroxide produced by chemical oxidation and having an approximately spherical shape of particle, with content of sulfuric acid radical contained in the $\beta$-nickel oxy-hydroxide altering from 0.005 to 0.7% by mass.

Characteristics of these alkaline batteries were evaluated under four test conditions. In condition 1, the discharge time until reaching a discharge termination voltage of 1.0 V was measured after the production of the battery at the ambient temperature of 20°C with a constant discharge power of 1.5W. In condition 2, the discharge time until reaching a discharge termination voltage of 1.0 V was measured after the production of the battery at the ambient temperature of 20°C with a constant discharge power of 0.1 W. In condition 3, the discharge time until reaching a discharge termination voltage of 1.0 V was measured with a constant discharge power of 1.5 W by resuming the ambient temperature of 20°C after storing the battery at the ambient temperature of 60°C for 20 days. In condition 4, the discharge time until reaching a discharge termination voltage of 1.0 V was measured with a constant discharge power of 0.1 W by resuming the ambient temperature of 20°C after storing the battery at the ambient temperature of 60°C for 20 days.

The results of the measurements under the four test conditions in Examples 1 to 16 are shown in Table 7.

Table 7

| | Cathode active material | Content of sulfuric acid radical (% by mass) | Discharge time under heavy load* | | Self-discharge ratio (%) | Discharge time under light load** | | Self-discharge ratio (%) |
|---|---|---|---|---|---|---|---|---|
| | | | Immediately after production (min) | After storage at 60°C for 20 days (min) | | Immediately after production (h) | After storage at 60°C for 20 days (h) | |
| Example 1 | β-NiOOH | 0.005 | 52 | 38 | 27 | 27 | 22 | 19 |
| Example 2 | | 0.01 | 52 | 38 | 27 | 27 | 22 | 19 |
| Example 3 | | 0.03 | 52 | 38 | 27 | 27 | 22 | 19 |
| Example 4 | | 0.05 | 52 | 38 | 27 | 27 | 22 | 19 |
| Example 5 | | 0.11 | 52 | 38 | 27 | 27 | 22 | 19 |
| Example 6 | | 0.24 | 52 | 38 | 27 | 27 | 22 | 19 |
| Example 7 | | 0.38 | 52 | 38 | 27 | 27 | 22 | 19 |
| Example 8 | | 0.4 | 52 | 38 | 27 | 27 | 22 | 19 |
| Example 9 | | 0.47 | 52 | 36 | 31 | 27 | 22 | 19 |
| Example 10 | | 0.51 | 52 | 31 | 40 | 27 | 20 | 26 |
| Example 11 | | 0.53 | 52 | 27 | 48 | 27 | 18 | 33 |
| Example 12 | | 0.55 | 52 | 24 | 54 | 27 | 14 | 48 |
| Example 13 | | 0.58 | 52 | 20 | 62 | 27 | 10 | 63 |
| Example 14 | | 0.61 | 52 | 18 | 65 | 27 | 9 | 67 |
| Example 15 | | 0.64 | 52 | 16 | 69 | 27 | 9 | 70 |
| Example 16 | | 0.7 | 52 | 14 | 73 | 27 | 7 | 74 |

* Discharge condition: temperature at 20°C, constant discharge power of 1.5 W, and discharge termination voltage at 1.0 V

** Discharge condition: temperature at 20°C, constant discharge power of 0.1 W, and discharge termination voltage at 1.0 V

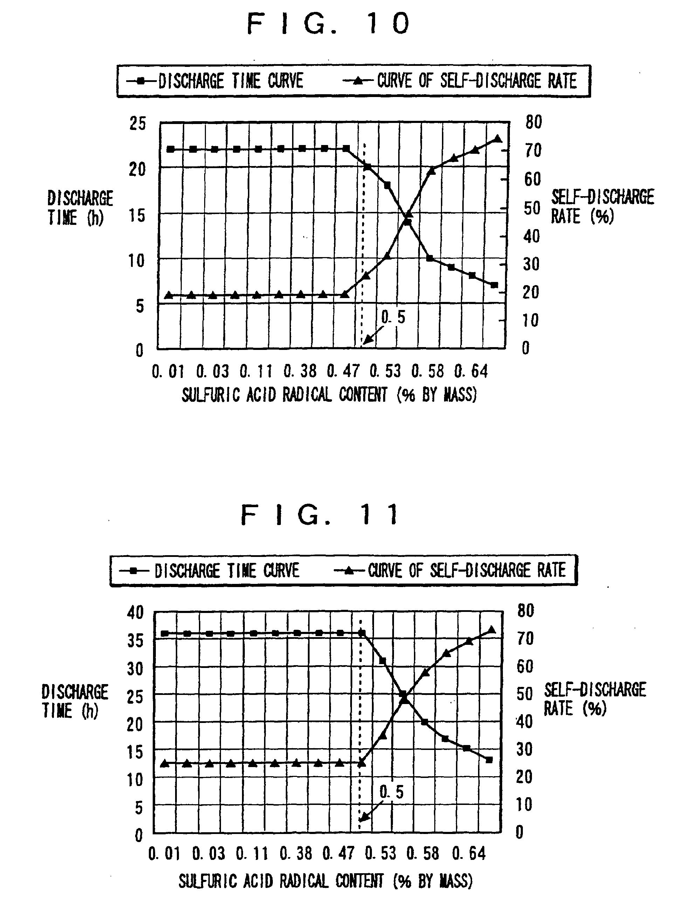

Correlation curves between the content of the sulfuric acid radical contained in β-nickel oxy-hydroxide, and the discharge time and self-discharge ratio after storage at 60°C for 20 days as shown in Figs. 9 and 10 are obtained from the results of the measurements in Table 7. Fig. 9 shows the relationship between the content of the sulfuric acid radical, and the discharge time and self-discharge ratio by heavy load discharge. Fig. 10 shows the relationship between the content of the sulfuric acid radical, and the discharge time and self-discharge ratio by light load discharge.

Fig. 9 shows that the content of the sulfuric acid radical in β-nickel oxy-hydroxide that permits the discharge time to be prolonged and the self-discharge ratio to be low in a case of the heavy load discharge is in the range of 0.5% or less by mass. In other words, the storage characteristics of the battery is deteriorated due to a high self-discharge ratio when the content of the sulfuric acid radical in β-nickel oxy-hydroxide exceeds 0.5% by mass.

Fig. 10 shows that the content of the sulfuric acid radical in β-nickel oxy-hydroxide that permits the discharge time to be prolonged and the self-discharge ratio to be low by heavy load discharge is also in the range of 0.5% or less by mass.

An alkaline battery excellent in the storage characteristics can be obtained by using β-nickel oxy-hydroxide produced by chemical oxidation and containing the sulfuric acid radical in the range of 0.5% or less by mass. Making particle of β-nickel oxy-hydroxide approximately spherical shape permits the β-nickel oxy-hydroxide to have a high density, thereby permitting a larger discharge capacity (battery capacity) to be obtained.

It is also confirmed from the results in Table 7 that the discharge time of the alkaline battery inmediately after the production is not affected by the content of the sulfuric acid radical.

The alkaline batteries in Examples 17 to 64 in the third embodiment will be next described below.

In Examples 17 to 32, as β-nickel oxy-hydroxide to be used in cathode mix 3, β-nickel oxy-hydroxide produced by chemical oxidation and having an approximately spherical shape of particle was used, with content of sulfuric acid radical contained in the β-nickel oxy-hydroxide altering from 0.005 to 0.7% by mass. The blend ratio of β-nickel oxy-hydroxide to the total amount of the cathode active material comprising the β-nickel oxy-hydroxide and manganese dioxide was 50% by mass. The batteries were produced with the same specification and the same production procedure as in Examples 1 to 16.

The results of measurements in Examples 17 to 32 under the conditions above are shown in Table 8.

Table 8

| | Blend ratio of β-NiOOH (% by mass) | Content of sulfuric acid radical (% by mass) | Discharge time under heavy load* | | Self-discharge ratio (%) | Discharge time under light load** | | Self-discharge ratio (%) |
|---|---|---|---|---|---|---|---|---|
| | | | Immediately after production (min) | After storage at 60°C for 20 days (min) | | Immediately after production (h) | After storage at 60°C for 20 days (h) | |
| Example 17 | 50% | 0.005 | 48 | 36 | 25 | 25 | 21 | 16 |
| Example 18 | | 0.01 | 48 | 36 | 25 | 25 | 21 | 16 |
| Example 19 | | 0.03 | 48 | 36 | 25 | 25 | 21 | 16 |
| Example 20 | | 0.05 | 48 | 36 | 25 | 25 | 21 | 16 |
| Example 21 | | 0.11 | 48 | 36 | 25 | 25 | 21 | 16 |
| Example 22 | | 0.24 | 48 | 36 | 25 | 25 | 21 | 16 |
| Example 23 | | 0.38 | 48 | 36 | 25 | 25 | 21 | 16 |
| Example 24 | | 0.4 | 48 | 36 | 25 | 25 | 21 | 16 |
| Example 25 | | 0.47 | 48 | 36 | 25 | 25 | 21 | 16 |
| Example 26 | | 0.51 | 48 | 36 | 25 | 25 | 19 | 24 |
| Example 27 | | 0.53 | 48 | 31 | 35 | 25 | 16 | 36 |
| Example 28 | | 0.55 | 48 | 25 | 48 | 25 | 12 | 52 |
| Example 29 | | 0.58 | 48 | 20 | 58 | 25 | 10 | 60 |
| Example 30 | | 0.61 | 48 | 17 | 65 | 25 | 9 | 64 |
| Example 31 | | 0.64 | 48 | 15 | 69 | 25 | 8 | 68 |
| Example 32 | | 0.7 | 48 | 13 | 73 | 25 | 8 | 68 |

\* Discharge condition: temperature at 20°C, constant discharge power of 1.5 W, and discharge termination voltage at 1.0 V

\*\* Discharge condition: temperature at 20°C, constant discharge power of 0.1 W, and discharge termination voltage at 1.0 V

In Examples 33 to 48, the batteries were produced by the same specification as the one in Example 17 to 32 according to the same production procedure as described above, except that the proportion of β-nickel oxy-hydroxide in the total amount of the cathode active material was adjusted to 30% by mass.

The results of the measurements in Examples 33 to 48 under the test conditions described above are shown in Table 9.

Table 9

| | Blend ratio of β-NiOOH (% by mass) | Content of sulfuric acid radical (% by mass) | Discharge time under heavy load* | | Self-discharge ratio (%) | Discharge time under light load** | | Self-discharge ratio (%) |
|---|---|---|---|---|---|---|---|---|
| | | | Immediately after production (min) | After storge at 60°C for 20 days (min) | | Immediately after production (h) | After storage at 60°C for 20 days (h) | |
| Example 33 | 30% | 0.005 | 42 | 32 | 24 | 24 | 21 | 13 |
| Example 34 | | 0.01 | 42 | 32 | 24 | 24 | 21 | 13 |
| Example 35 | | 0.03 | 42 | 32 | 24 | 24 | 21 | 13 |
| Example 36 | | 0.05 | 42 | 32 | 24 | 24 | 21 | 13 |
| Example 37 | | 0.11 | 42 | 32 | 24 | 24 | 21 | 13 |
| Example 38 | | 0.24 | 42 | 32 | 24 | 24 | 21 | 13 |
| Example 39 | | 0.38 | 42 | 32 | 24 | 24 | 21 | 13 |
| Example 40 | | 0.4 | 42 | 32 | 24 | 24 | 21 | 13 |
| Example 41 | | 0.47 | 42 | 32 | 24 | 24 | 20 | 17 |
| Example 42 | | 0.51 | 42 | 27 | 36 | 24 | 19 | 21 |
| Example 43 | | 0.53 | 42 | 21 | 50 | 24 | 15 | 38 |
| Example 44 | | 0.55 | 42 | 17 | 60 | 24 | 13 | 46 |
| Example 45 | | 0.58 | 42 | 16 | 62 | 24 | 12 | 50 |
| Example 46 | | 0.61 | 42 | 15 | 64 | 24 | 11 | 54 |
| Example 47 | | 0.64 | 42 | 14 | 67 | 24 | 10 | 58 |
| Example 48 | | 0.7 | 42 | 12 | 71 | 24 | 10 | 58 |

* Discharge condition: temperature at 20 °C, constant discharge power of 1.5 W, and discharge termination voltage at 1.0 V

** Discharge condition: temperature at 20°C, constant discharge power of 0.1 W, and discharge termination voltage at 1.0 V

In Examples 49 to 64, the batteries were produced by the same specification as the one in Examples 17 to 32 according to the production procedure described above, except that the proportion of β-nickel oxy-hydroxide in the total amount of the cathode active material was adjusted to 10% by mass.

The results of the measurement in Examples 49 to 64 under the test conditions described above are shown in Table 10.

Table 10

| | Blend ratio of β-NiOOH (% by mass) | Content of sulfuric acid radical (% by mass) | Discharge time under heavy load[*] | | Self-discharge ratio (%) | Discharge time under light load[**] | | Self-discharge ratio (%) |
|---|---|---|---|---|---|---|---|---|
| | | | Immediately after production (min) | After storage at 60°C for 20 days (min) | | Immediately after production (h) | After storage at 60°C for 20 days (h) | |
| Example 49 | 10% | 0.005 | 30 | 22 | 27 | 24 | 22 | 8 |
| Example 50 | | 0.01 | 30 | 22 | 27 | 24 | 22 | 8 |
| Example 51 | | 0.03 | 30 | 22 | 27 | 24 | 22 | 8 |
| Example 52 | | 0.05 | 30 | 22 | 27 | 24 | 22 | 8 |
| Example 53 | | 0.11 | 30 | 22 | 27 | 24 | 22 | 8 |
| Example 54 | | 0.24 | 30 | 22 | 27 | 24 | 22 | 8 |
| Example 55 | | 0.38 | 30 | 22 | 27 | 24 | 22 | 8 |
| Example 56 | | 0.4 | 30 | 22 | 27 | 24 | 22 | 8 |
| Example 57 | | 0.47 | 30 | 22 | 27 | 24 | 22 | 8 |
| Example 58 | | 0.51 | 30 | 18 | 40 | 24 | 20 | 17 |
| Example 59 | | 0.53 | 30 | 13 | 57 | 24 | 17 | 29 |
| Example 60 | | 0.55 | 30 | 11 | 63 | 24 | 15 | 38 |
| Example 61 | | 0.58 | 30 | 10 | 67 | 24 | 14 | 42 |
| Example 62 | | 0.61 | 30 | 10 | 67 | 24 | 13 | 46 |
| Example 63 | | 0.64 | 30 | 9 | 70 | 24 | 12 | 50 |
| Example 64 | | 0.7 | 30 | 9 | 70 | 24 | 12 | 50 |

* Discharge condition: temperature at 20°C, constant discharge power of 1.5 W, and discharge termination voltage at 1.0 V

** Discharge condition: temperature at 20°C, constant discharge power of 0.1 W, and discharge termination voltage at 1.0 V

EP 1 445 812 A1

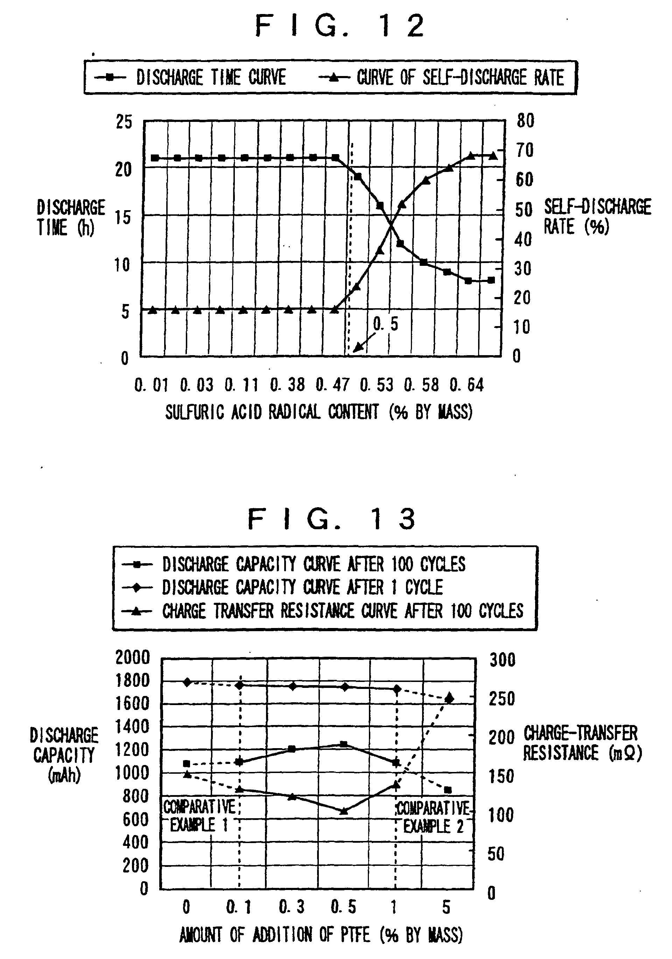

Correlation curves as shown in Fig. 11 and 12 between the content of the sulfuric acid radical contained in β-nickel oxy-hydroxide, and the discharge time and self-discharge ratio after storage at 60°C for 20 days are obtained from the results of the measurements in Table 8. Fig. 11 shows the relationship between the content of the sulfuric acid radical, and the discharge time and self-discharge ratio by heavy load discharge, while Fig. 12 shows the relationship between the content of the sulfuric acid radical, and the discharge time and self-discharge ratio by light load discharge.

Fig. 11 shows that the content of the sulfuric acid radical in β-nickel oxy-hydroxide that permits the discharge time to be prolonged and self-discharge ratio to be low by heavy load discharge is in the range of 0.5% or less by mass. In other words, the storage characteristics of the battery are deteriorated due to a high self-discharge ratio when the content of the sulfuric acid radical in β-nickel oxy-hydroxide exceeds 0.5% by mass.

Fig. 12 shows that the content of the sulfuric acid radical in β-nickel oxy-hydroxide that permits the discharge time to be prolonged and self-discharge ratio to be low by light load discharge is also in the range of 0.5% or less by mass.

The effect of restricting the content of the sulfuric acid radical (0.5% or less by mass) can be confirmed from the results of the measurements in Tables 9 and 10 when the blend ratio of β-nickel oxy-hydroxide is changed to 30% and 10% by mass.

As described above, using the cathode active material prepared by mixing β-nickel oxy-hydroxide produced by chemical oxidation and manganese dioxide, and controlling the content of the sulfuric acid radical in β-nickel oxy-hydroxide in the range of 0.5% or less by mass allows an alkaline battery excellent in the storage characteristics to be obtained. Using the mixture of β-nickel oxy-hydroxide and manganese dioxide as the cathode active material permits the packing density of the cathode to be large without decreasing the reaction area in the cathode/anode. Using inexpensive manganese dioxide enables the production cost of the battery to be reduced. Since the approximately spherical particle of β-nickel oxy-hydroxide makes it possible to have a higher density of the β-nickel oxy-hydroxide, a larger discharge capacity (battery capacity) may be obtained.

It is confirmed from the results of the measurements in Tables 8 to 10 that the discharge time immediately after the production of the alkaline battery is not affected by the content of the sulfuric acid radical.

The fourth embodiment of the present invention will be described hereinafter.

The configuration of the alkaline battery in the fourth embodiment is the same as configuration of the alkaline battery 100 in the first embodiment (see Fig. 1).

The alkaline batteries in Examples 1 to 4 in the fourth embodiment and Comparative Exanples 1 and 2 were investigated.

A battery can 2 of LR6 (AA) size made of a nickel-plated iron plate on the surface was used in Example 1. Organic paint containing graphite powder and binder was sprayed and dried on the inner surface of the battery can 2 to form a conductive paint film.

As cathode mix 3, β-nickel oxy-hydroxide prepared by chemical oxidation and having approximately spherical shape of particle and graphite powder were mixed in a dry state in a proportion of 10:1 and PTFE was then mixed to the mixture of the β-nickel oxy-hydroxide and the graphite powder in an amount of 0.1% by weight followed by adding to it a 40% by weight potassium hydroxide solution in an amount of 8% by weight under a stirring method using an impeller, a ball mill or the like. The mixture was press-molded into a hollow cylinder.

As anode mix 5, gelled potassium hydroxide solution containing 65% by weight of zinc particles and 2% by weight of zinc oxide were used, and 5 g of the mix was filled.

The battery was produced according to the same production procedure as the one of the alkaline battery 100 described above using the battery can 2, the cathode mix 3, and the anode mix 5.

In Example 2, the battery was produced by the same method as one in Example 1, except that 0.3% by weight of the fluorinated PTFE resin was added in the cathode mix 3.

In Example 3, the battery was produced by the same method as one in Example 1, except that 0.5% by weight of the fluorinated PTFE resin was added in the cathode mix 3.

In Example 4, the battery was produced by the same method as one in Example 1, except that 1.0% by weight of the fluorinated PTFE resin was added in the cathode mix 3.

In Comparative Example 1, the battery was produced by the same method as one in Example 1, except that no fluorinated PTFE resin was added in the cathode mix 3.

In comparative Example 2, the battery was produced by the same method as one in Example 1, except that 5.0% by weight of the fluorinated PTFE resin was added in the cathode mix 3.

The cycle characteristics of these alkaline batteries were evaluated by measuring their discharge capacities and charge transfer resistances under the following test conditions.

In the measurement of the discharge capacity, the discharge condition comprised discharging of 100 mA and cut-off at 1.0 V, and the charge condition comprised charging at a constant current of 180 mA and a constant voltage of 1.95 V for 10 hours, and the charge-discharge cycles were repeated. The discharge capacities after 1 cycle and 100 cycles were measured.

In the measurement of the charge transfer resistance, the charge transfer resistance after 100 cycles of charge-discharge was measured under an alternating current impedance method. For the measurement, a 12808-type impedance analyzer (manufactured by Solartron Analytical) is used. The test condition was 0.1 to 20,000 Hz of the frequency range and 10 mV of the applied voltage. The charge transfer resistance after 100 cycles was measured.

The discharge capacities and charge transfer resistance of the batteries in Examples 1 to 4 and Comparative example 1 and 2 were measured under the test conditions above. The results are shown in Table 11.

Table 11

|  | Amount of added PTFE (% by weight) | Discharge capacity after 1 cycle of discharge (mAh) | Discharge capacity after 100 cycles of discharge (mAh) | Charge transfer resistance after 100 cycles of discharge (mΩ) |
|---|---|---|---|---|
| Example 1 | 0.1 | 1770 | 1100 | 130 |
| Example 2 | 0.3 | 1760 | 1200 | 120 |
| Example 3 | 0.5 | 1750 | 1250 | 100 |
| Example 4 | 1 | 1740 | 1100 | 135 |
| Comparative Example 1 | 0 | 1800 | 1080 | 150 |
| Comparative Example 2 | 5 | 1650 | 850 | 250 |

Correlation curves between the amount of added PTFE, and the discharge capacity and charge transfer resistance as shown in Fig. 13 are obtained from the results of the measurements in Table 11. Fig. 13 shows that the amount of added PTFE in which the discharge capacity is large after 100 cycles of discharge, or the rate of change of the discharge capacity is smaller as compared to the discharge capacity after 1 cycle of discharge and the charge transfer resistance is reduced, is within the range of 0.1 to 1.0% by weight, preferably 0.3 to 0.5% by weight. In other words, the charge transfer resistance in the cathode is increased to decrease conductivity when the amount of added FTFE exceeds 1.0% by weight since the surface of the cathode active material is excessively covered with the binder. The cycle characteristics are deteriorated due to the decrease of the effect of the binder when the amount of added PTFE is less than 0.1% by weight. The charge transfer resistance is more decreased while the discharge capacity after 100 cycles of discharge is more increased when the amount of added PTFE is in the range of 0.3 to 0.5% by weight. Accordingly, swelling of the cathode active material by discharge is suppressed to enable an alkaline battery excellent in the cycle characteristics to be obtained by restricting the amount of added PTFE in the range of 0.1 to 1.0% by weight. By adding the PTFE in the range of 0.3 to 0.5% by weight, the alkaline battery becomes more excellent in its cycle characteristics.

Consequently, adding the fluorinated resin PTFE as binder to the cathode mix using β-nickel oxy-hydroxide as the cathode active material in the range of 0.1 to 1.0% by weight, preferably in the range of 0.3 to 0.5% by weight allows an alkaline battery excellent in its cycle characteristics to be obtained.

Electrical and chemical stability and dispersability required for the binder may be obtained by using the fluorinated resin PTFE as the binder.

The approximately spherical shape of particle of the β-nickel oxy-hydroxide permits β-nickel oxy-hydroxide to have a high density and a larger discharge capacity (battery capacity) to be obtained.

Next, a case where FEP as a binder is added in the cathode mix 3 will be described below.

Since FEP contains tetrafluoroethylene in the structure, FEP is considered to have the same effect as PTFE.

Alkaline batteries in Examples 5 to 8 in the fourth embodiment and in Comparative Examples 1 and 3 were investigated.

The batteries were respectively prepared by the same specification as one in Example 1 according to the production procedure as described above in Examples 5 to 8, except that the fluorinated resin FEP was added as the binder, and the amount of added FEP altered in the range of 0.1 to 1.0% by weight relative to the amount of the mixture of β-nickel oxy-hydroxide and graphite powder.

In Example 5, the fluorinated resin FEP was added to the cathode mix 3 in an amount of 0.1% by weight.

In Example 6, the fluorinated resin FEP was added to the cathode mix 3 in an amount of 0.3% by weight.

In Example 7, the fluorinated resin EEP was added to the cathode mix 3 in an amount of 0.5% by weight.

In Example 8, the fluorinated resin FEP was added to the cathode mix 3 in an amount of 1.0% by weight.

In Comparative Example 1, the battery was produced by the same method as one in Example 1, except that no fluorinated resin FEP was added to the cathode mix 3.

In Comparative Example 3, the battery was produced by the same method as one in Example 1, except that the fluorinated resin FEP was added to the cathode mix 3 in an amount of 5.0% by weight.

The alkaline batteries 100 comprising FEP added in the cathode mix 3 as the binder was subjected to cycle characteristic evaluation.

The results of the measurements of the discharge capacities and charge transfer resistances in Examples 5 to 8 and Comparative Examples 1 and 3 under the above test conditions are shown in Table 12.

Table 12

| | Amount of added FEP (% by weight) | Discharge capacity after 1 cycle of discharge (mAh) | Discharge capacity after 100 cycles of discharge (mAh) | Charge transfer resistance after 100 cycles of discharge (mΩ) |
|---|---|---|---|---|
| Example 5 | 0.1 | 1790 | 1150 | 120 |
| Example 6 | 0.3 | 1780 | 1250 | 115 |
| Example 7 | 0.5 | 1760 | 1230 | 110 |
| Example 8 | 1 | 1740 | 1120 | 140 |
| Comparative Example 1 | 0 | 1800 | 1080 | 150 |
| Comparative Example 3 | 5 | 1660 | 850 | 250 |

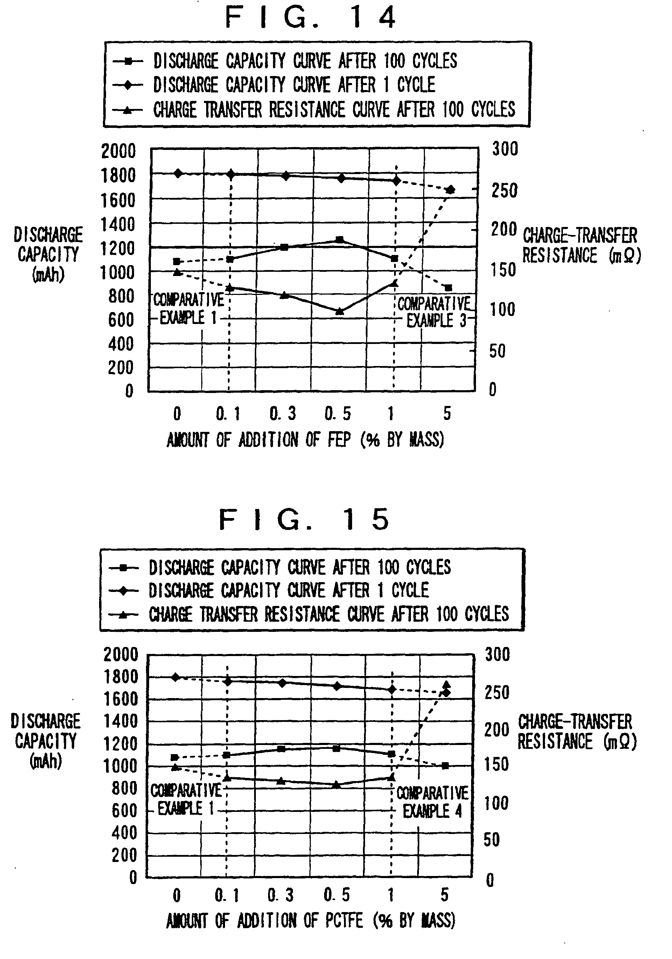

Correlation curves between the amount of added FEP, and the discharge capacity and charge transfer resistance as shown in Fig. 14 are obtained from the results of the measurements in Table 12. Fig. 14 shows that the amount of added PTFE in which the discharge capacity is large after 100 cycles of discharge, or the rate of change of the discharge capacity is smaller as compare by the discharge capacity after 1 cycle of discharge, and the charge transfer resistance is reduced, is within the range of 0.1 to 1.0% by weight, preferably 0.3 to 0.5% by weight. In other words, the charge transfer resistance in the cathode is increased to decrease conductivity when the amount of added FET exceeds 1.0% by weight since the surface of the cathode active material is excessively covered with the binder. The cycle characteristics are deteriorated due to the decrease of the effect of the binder when the amount of added FEP is less than 0.1% by weight. The charge transfer resistance is more decreased while the discharge capacity after 100 cycles of discharge is more increased when the amount of added FEP is in the range of 0.3 to 0.5% by weight. Accordingly, swelling of the cathode active material by discharge is suppressed to enable an alkaline battery excellent in the cycle characteristics to be obtained by restricting the amount of added FEP in the range of 0.1 to 1.0% by weight. Further, the cycle characteristics of the alkaline battery becomes more excellent by adding FEP in the range of 0.3 to 0.5% by weight.

Consequently, adding the fluorinated resin FEP as the binder to the cathode mix 3 using β-nickel oxy-hydroxide as the cathode active material in the range of 0.1 to 1.0% by weight, preferably in the range of 0.3 to 0.5% by weight allows an alkaline battery excellent in the cycle characteristics to be obtained.

Electrical and chemical stability and dispersability required for the binder may be obtained by using the fluorinated resin FEP as the binder.

Next, a case where PCTFE as a binder is added in the cathode mix 3 will be described below.

Since PCTFE contains tetrafluoroethylene in the structure as in FEP, PCTFE is considered to have the same effect as PTFE and FEP.

Alkaline batteries in Examples 9 to 12 in the fourth embodiment and in Comparative Examples 1 and 4 were then investigated.

In Examples 9 to 12, the batteries were respectively prepared by the same specification as one in Example 1 according to the production procedure as described above, except that the fluorinated resin PCTFE was added as the binder, and the amount of added PCTFE was changed in the range of 0.1 to 1.0% by weight relative to the amount of the mixture of β-nickel oxy-hydroxide and graphite powder.

In Example 9, the fluorinated resin PCTFE was added to the cathode mix 3 in an amount of 0.1% by weight.

In Example 10, the fluorinated resin PCTFE was added to the cathode mix 3 in an amount of 0.3% by weight.

In Example 11, the fluorinated resin PCTFE was added to the cathode mix 3 in an amount of 0.5% by weight.

In Example 12, the fluorinated resin PCTFE was added to the cathode mix 3 in an amount of 1.0% by weight.

In Comparative Example 1, the battery was produced by the same method as in Example 1, except that no fluorinated resin PCTEE was added to the cathode mix 3.

In Comparative Example 4, the battery was produced by the same method as in Example 1, except that the fluorinated resin PCTFE was added to the cathode mix 3 in a proportion of 5.0% by weight.

The alkaline batteries comprising PCTFE added in the cathode mix 3 as the binder was subjected to cycle characteristic evaluation.

The results of the measurements of the discharge capacities and charge transfer resistance in Examples 9 to 12 and Comparative Examples 1 and 4 are shown in Table 13.

Table 13

|  | Amount of added PCTFE (% by weight) | Discharge capacity after 1 cycle of discharge (mAh) | Discharge capacity after 100 cycles of discharge (mAh) | Charge transfer resistance after 100 cycles of discharge (mΩ) |
|---|---|---|---|---|
| Example 9 | 0.1 | 1760 | 1100 | 135 |
| Example 10 | 0.3 | 1750 | 1150 | 130 |
| Example 11 | 0.5 | 1720 | 1170 | 125 |
| Example 12 | 1 | 1690 | 1110 | 135 |
| Comparative Example 1 | 0 | 1800 | 1080 | 150 |
| Comparative Example 4 | 5 | 1660 | 1000 | 260 |

Correlation curves between the amount of added PCTFE, and the discharge capacity and charge transfer resistance as shown in Fig. 15 are obtained from the results of the measurements in Table 13. Fig. 15 shows that the amount of added PCTFE in which the discharge capacity is large after 100 cycles of discharge, or the rate of change of the discharge capacity is smaller as compared to the discharge capacity after 1 cycle of discharge, and the charge transfer resistance is reduced, is within the range of 0.1 to 1.0% by weight, preferably 0.3 to 0.5% by weight. In other words, the charge transfer resistance is increased to decrease conductivity when the amount of added PCTFE exceeds 1.0% by weight since the surface of the cathode active material is excessively covered with the binder. The cycle characteristics are deteriorated due to decrease of the effect of the binder when the amount of added PCTFE is less than 0.1% by weight. The charge transfer resistance is more decreased while the discharge capacity after 100 cycles of discharge is more increased when the amount of added PCTFE is in the range of 0.3 to 0.5% by weight. Accordingly, swelling of the cathode active material by discharge is suppressed to enable an alkaline battery excellent in the cycle characteristics to be obtained by restricting the amount of added PCTFE in the range of 0.1 to 1.0% by weight. By adding the PCTFE in the range of 0.3 to 0.5% by weight, the alkaline battery more excellent in the cycle characteristics thereof is obtained.

Consequently, adding the fluorinated resin PCTFE to the cathode mix 3 using β-nickel oxy-hydroxide as the cathode active material in the range of 0.1 to 1.0% by weight, preferably in the range of 0.3 to 0.5% by weight allows an alkaline battery excellent in its cycle characteristics to be obtained.

Electrical and chemical stability and dispersability required for the binder may be obtained by using the fluorinated resin PCTFE as the binder.

The fifth embodiment of the present invention will be described hereinafter.

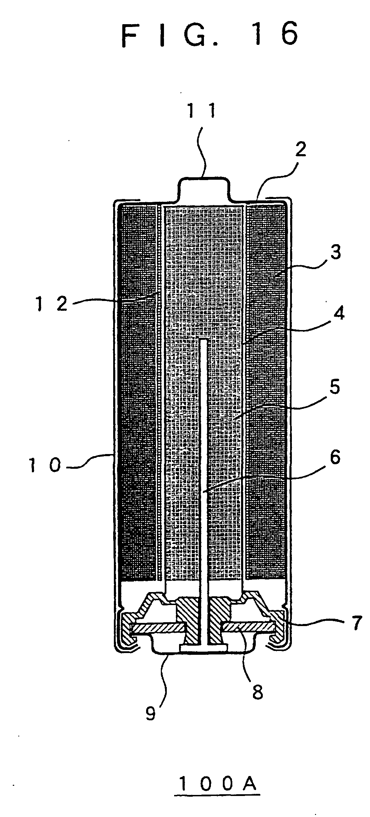

Fig. 16 shows the configuration of the alkaline battery 100A in the fifth embodiment of the present invention. This alkaline battery 100A is a size AA battery having an inside-out structure. The parts corresponding to those in Fig. 1 are given the same reference numerals as in Fig. 16.

The alkaline battery 100A comprises a battery can 2, a cathode mix 3, a separator 4, an anode mix 5, a current collector pin 6, a gasket 7, a neutral cover 8, a negative terminal 9, and a porous metal cylinder 12.

The battery can 2 is formed, for example, by presswork of a metal plate subjected to nickel plating. The battery can 2 also serves as a positive terminal of the alkaline battery 100A.

The cathode mix 3 is a hollow cylinder, and is disposed within the battery can 2. For producing the cathode mix 3, β-nickel oxy-hydroxide as a cathode active material, a carbon powder as a conductive material and an alkaline solution as an electrolyte solution are mixed together, and the mixture is molded into the hollow cylinder. A graphite powder is used for the carbon powder used as the conductive material. While potassium hydroxide solution is used as the alkaline solution, lithium hydroxide solution or sodium hydroxide solution, or a mixture thereof may be also used.

The cathode mix 3 is prepared as follows. First, β-nickel oxy-hydroxide, the graphite powder and a 40% potassium hydroxide (KOH) solution are weighed in a proportion of 10:1:1, and they are mixed under a stirring method using an impeller or a ball mill. The mixed material is then press-molded into a hollow cylinder to obtain the cathode mix 3.

The separator 4 is a bottom-sealed cylinder, and is disposed at the inside of the cathode mix 3. For example, as the separator 4, a synthetic fiber nonwoven fabric having good liquid absorbing and retaining property and being excellent in alkali resistance is used.

The anode mix 5 is a gel, and is filled in the separator 4. The anode mix 5 is prepared by uniformly dispersing and mixing particles of zinc and zinc oxide as anode active material in the potassium hydroxide solution as the electrolyte using a gelling agent.

The porous metal cylinder 12 is disposed between the cathode mix 3 and the separator 4. The porous metal cylinder comprises a punching metal, a metal net, and an expand metal made of a metal such as stainless steel, nickel, copper and tin.

Since the metal available for the porous metal cylinder depends on the kind of the electrolyte of the battery and the kind of the positive and negative electrodes, the metal available changes according to changes of the battery system. For example, metal such as stainless steel, nickel, copper and tin that do not react with the alkaline solution and the cathode may be used in the nickel-zinc storage battery.

An opening of the battery can 2 is hermetically sealed with the gasket 7 as an insulator, the neutral cover 8, and a negative terminal 9. A metallic current collector pin 6 is welded to the negative terminal 9.

The alkaline battery 100A shown in Fig. 16 is manufactured as follows. The cathode mix 3 press-molded into a hollow cylinder is inserted into the battery can 2. Then, the porous metal cylinder 12 is inserted into the inside of the cathode mix formed into the hollow cylinder. Subsequently, the bottom-sealed cylinder of the separator 4 is inserted into the inside of the porous metal cylinder 12, and the gelled anode mix 5 is filled in the separator 4. Finally, the gasket 7 as the insulator, the neutral cover 8 and the negative terminal 9 are inserted into the battery can 2, and the edge of the opening of the battery can 2 is folded into the inside to fix the gasket 7 so that the gasket 7 is fixed. The current collector pin 6 welded to the negative terminal 9 is inserted into the gelled anode mix 5 when the gasket 7 and other members are inserted into the battery can 2.

Charge collection of the negative electrode in the cylindrical storage battery 100A shown in Fig. 16 is ensured by inserting the current collector pin 6 welded to the negative terminal 9 into the anode mix 5. Charge collection of the cathode is also ensured by connecting the cathode mix 3 to the battery can 2. The outer circumference face of the battery can 2 is covered with an external label 10 on which name of the manufacturer, the kind of the battery and notices are printed, and the positive terminal 11 is located at the projection (the top of the cylindrical storage battery 100A in the drawing) at the bottom of the battery can 2.

The cycle characteristics of the alkaline battery 100A shown in Fig. 16 was evaluated by measuring the discharge capacity under the test conditions below.

After discharging 10 batteries with a current of 100 mA until the voltage is reduced to 1 V, the capacity retention ratios were compared with each other after 50 cycles of discharge by defining the process for charging up to 1.9 V as 1 cycle in the charge-discharge test.

The capacity retention ratio is defined by the proportion (%) of the discharge capacity to the initial discharge capacity represented by the following equation:

$$\text{capacity retention ratio (\%) at } 50^{th} \text{ cycle} = [(\text{discharge capacity at } 50^{th} \text{ cycle})/(\text{initial discharge capacity})] \times 100$$

Here, the alkaline batteries 100A in Comparative Example 1 and Examples 1 to 21 in the fifth embodiment were measured.

The alkaline battery in Comparative Example 1 has the same specification as the one of the alkaline battery 100, and as β-nickel oxy-hydroxide to be used for the cathode mix 3, the β-nickel oxy-hydroxide prepared by chemical oxidation and having approximately spherical shape of particle, which was dissolved at least one of the elements selected from Zn, Co and Mg, was used. The cathode mix 3 was prepared by mixing β-nickel oxy-hydroxide, graphite powder and 40% KOH electrolyte in a proportion of 10:1:1. The cathode mix 3 (10 g) was molded into a hollow cylinder with an outer diameter of 13.3 mm, an inner diameter of 9.0 mn and a height of 40 mm. After inserting the separator with a thickness of 0.2 mm and injecting 1.5 g of the electrolyte into the hollow cylinder, 5g of anode mix prepared by mixing the zinc powder, gelling agent an 40% KOH electrolyte in a proportion of 65:1:3 together with a small quantity of additives was filled into the cylinder to prepare an alkaline battery according to the same production procedure as that of the alkaline battery 100 as described above.

In Examples 1 to 6, the β-nickel oxy-hydroxide prepared by chemical oxidation and having approximately spherical shape of particle, in which at least one of the elements selected from Zn, Co and Mg was dissolved, was used for the cathode mix 3. The cathode mix 3 was prepared by mixing β-nickel oxy-hydroxide, graphite powder and 40% KOH electrolyte in a proportion of 10:1:1. The cathode mix 3 (10 g) was molded in the cathode can 2 into a hollow cylinder with an outer diameter of 13.3 nm, an inner diameter of 9.0 mm and a height of 40 mm. Then, each stainless steel punching metal with a thickness of 30, 50, 100, 150, 200 or 250 μm formed into a hollow cylinder with an outer diameter of 9.0 mm and a height of 40 mm was inserted into the inside of the cathode mix formed into a hollow cylinder. The separator with a thickness of 0.2 mm was inserted into the hollow cylinder and, after injecting 1.5 g of the electrolyte in the cylinder, 5 g of the cathode mix prepared by mixing the zinc powder, gelling agent and 40% KOH electrolyte in a proportion of 65:1:34 together with minute quantities of additives was filled in the bottom-sealed cylinder of the separator to produce respective batteries according to the same production procedure as that of the cylindrical storage battery 100A as described above.

These results of the measurements in Comparative Example 1 and Examples 1 to 6 under the test conditions described above are described in Table 14.

Table 14

|  | Thickness of stainless punching metal (μm) | Capacity retention ratio (%) |
|---|---|---|
| Example 1 | 30 | 58 |
| Example 2 | 50 | 70 |
| Example 3 | 100 | 79 |
| Example 4 | 150 | 82 |
| Example 5 | 200 | 72 |
| Example 6 | 250 | 50 |
| Comparative Example 1 | None | 57 |

In Examples 7 to 12, each metal net made of stainless steel with a thickness of 30, 50, 100, 150, 200 and 250 μm formed into a hollow cylinder with an outer diameter of 9.0 mn and a height of 40 mn was disposed between the hollow cylinders of cathode mix 3 and separator 4. Alkaline batteries were produced by the same specification as one in Examples 1 to 6 except the conditions above according to the same production procedure as that of the alkaline battery 100A as described above.

The results of the measurements in Examples 7 to 12 under the test condition above are shown in Table 15. Comparative Example 1 in Table 15 is the same as described above.

Table 15

|  | Thickness of stainless steel net (μm) | Capacity retention ratio (%) |
|---|---|---|
| Example 7 | 30 | 57 |
| Example 8 | 50 | 65 |
| Example 9 | 100 | 70 |
| Example 10 | 150 | 74 |
| Example 11 | 200 | 66 |
| Example 12 | 250 | 55 |
| Comparative Example 1 | None | 57 |

In Examples 13 to 18, each stainless steel expand metal with a thickness of 30, 50, 100, 150, 200 and 250 μm formed into a hollow cylinder with an outer diameter of 9.0 mm and a height of 40 mm was disposed between the hollow cylinders of cathode mix 3 and separator 4. Alkaline batteries were produced by the same specification as one in Examples 1 to 6 except the conditions above according to the same production procedure as that of the alkaline battery 100A as described above.

The results of the measurements in Examples 13 to 18 under the test condition above are shown in Table 16. Comparative Example 1 in Table 16 is the same as described above.

Table 16

|  | Thickness of stainless steel expand metal (μm) | Capacity retention ratio (%) |
|---|---|---|
| Example 13 | 30 | 58 |
| Example 14 | 50 | 69 |
| Example 15 | 100 | 74 |
| Example 16 | 150 | 81 |
| Example 17 | 200 | 71 |
| Example 18 | 250 | 48 |
| Comparative Example 1 | None | 57 |

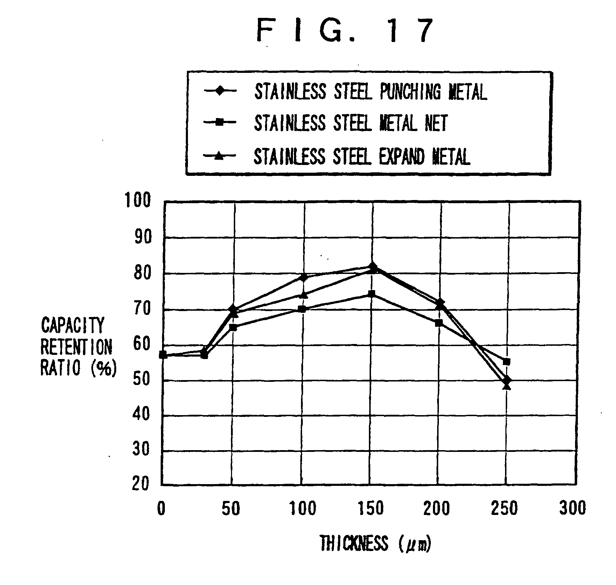

Correlation curves in Fig. 17 between the thickness of the porous metal cylinder and capacity retention ratio are obtained from the results of the measurement in Tables 14 to 16. Fig. 17 shows that the thickness of the porous metal cylinder 12 that permits the capacity retention ratio of the alkaline battery 100A to be large after 50 cycles of charge-discharge is in the range of 50 to 200 μm. A higher capacity retention ratio is obtained when the thickness is in the range of 100 to 150 μm particularly in the range described above. While deterioration of the capacity due to the charge-discharge cycles depends on the thickness of the porous metal cylinder 12, the cathode active material is swelled as if there is no porous metal cylinder 12 when the thickness of the cylinder is less than 50 μm. Since the distance between the cathode mix 3 and separator 4 is large when the thickness is larger than 200 μm, it is difficult to transfer water efficiently from the cathode to the anode. Accordingly, restricting the thickness of the porous metal cylinder 12 to the range of 50 to 200 μm allows swelling of the cathode due to water generated at the cathode in the charging process to be suppressed while water generated by charging to be efficiently transferred to the anode, thereby obtaining an alkaline battery having improved cycle characteristics.

The alkaline batteries 100A in Examples 19 to 21 comprising different materials of the porous metal cylinder 12 were measured.

In Example 19, a nickel punching metal having a thickness of 100 μm and formed into a hollow cylinder with an outer diameter of 9.0 mm and a height of 40 mm as the porous metal cylinder 12 was disposed between the cathode mix 3 and separator 4 each formed into a hollow cylinder. Battery was produced by the same specification as one in Examples 1 to 6, except for the material of the cylinder described above, according to the same production procedure as that of the alkaline battery 100A as described above.

In Example 20, a copper punching metal having a thickness of 100 μm and formed into a hollow cylinder with an outer diameter of 9.0 mm and a height of 40 mm as the porous metal cylinder 12 was disposed between the cathode mix 3 and separator 4 each formed into a hollow cylinder. Battery was produced by the same specification as one in Examples 1 to 6, except for the material of the cylinder described above, according to the same production procedure as that of the alkaline battery 100A as described above.

In Example 21, a tin punching metal having a thickness of 100 μm and formed into a hollow cylinder with an outer diameter of 9.0 nm and a height of 40 mm as the porous metal cylinder 12 was disposed between the cathode mix 3 and separator 4 each formed into a hollow cylinder. Battery was produced by the same specification as one in Examples 1 to 6, except for the material of the cylinder described above, according to the same production procedure as that of the alkaline battery 100A as described above.

The results of the measurements of the batteries in Examples 19 to 21 under the test conditions above are shown in Table 17. Comparative example 1 in Table 17 is the same as described above.

Table 17

|  | Material of porous metal cylinder (thickness 100 μm) | Capacity retention ratio (%) |
|---|---|---|
| Example 19 | Nickel punching metal | 81 |
| Example 20 | Copper punching metal | 76 |
| Example 21 | Tin punching metal | 73 |
| Comparative Example 1 | None | 57 |

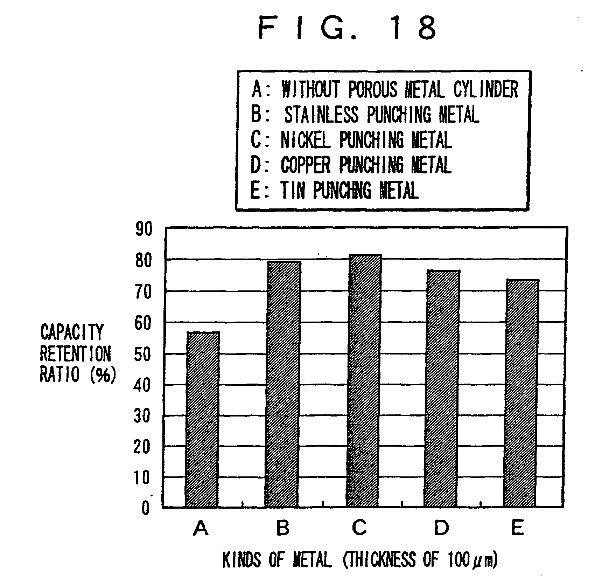

The relationship between the kinds of the metal of the porous metal cylinder 12 and capacity retention ratio in Fig. 18 is obtained from the results of the measurements in Table 17 and Example 3. Fig. 18 clearly shows that the capacity retention ratio is increased by using each kind of the metal as compared to the capacity retention ratio in Comparative Example 1. The capacity retention ratio is higher by using the nickel punching metal and stainless steel punching metal among the metals described above.

Thus, the alkaline battery is composed of a cathode comprising the cathode mix 3 formed into a hollow cylinder and an anode comprising the anode mix 5 filled in the hollow part of the cathode with interposition of the bottom-sealed separator 4 so that swelling of the cathode due to water generated at the cathode in the charging process can be suppressed by providing the porous cylinder 12 comprising a punching metal, a metal net or an expand metal made of stainless steel, nickel, copper and tin with a thickness of 50 to 200 μm between the cathode mix 3 and separator 4. This allows water generated at the cathode by charging to be efficiently transferred to the anode, thereby suppressing the deterioration of the capacity by the charge-discharge cycles to obtain an alkaline battery improved in the cycle characteristics.

The alkaline batteries in the embodiments above can be applied for primary and secondary batteries.

While the discharge capacity decreases when the β-nickel oxy-hydroxide has no spherical shape of particle, an effect for improving the charge characteristics under a heavy load can also be obtained by specifying the particle diameter distribution within a specified range as described above.

While the cylindrical alkaline batteries have been described in the embodiments above, the present invention is also applicable to other alkaline battery such as a flat alkaline battery.

The effect obtained by specifying the particle diameter distribution as described in the embodiments above can be valid in the measurement under the light load discharge conditions.

While fluorinated resins FREE, EEP and PCTFE have been used in the third embodiment above, the resin is not restricted thereto, and other fluorinated resins may be used.

While the punching metal, metal net and expand metal have been used for the porous metal cylinder in the fifth embodiment, the metal material is not restricted thereto, and other porous metal cylinders may be used.

While stainless steel, nickel, copper and tin have been used alone in the fifth embodiment, the same effect is obtainable by using a metal coated with another metal on the surface such as stainless steel plated with nickel.

While the alkaline batteries having a cathode comprising the cathode mix 3 formed into a hollow cylinder and an anode comprising the anode mix 5 filled in the hollow part of the cathode with interposition of a bottom-sealed cylindrical separator 4 have been described in the embodiments above, the alkaline battery according to the invention is not restricted thereto. Instead, the present invention is applicable to an alkaline battery having an anode comprising an anode mix formed into a hollow cylinder and a cathode comprising a cathode mix filled in the hollow part of the anode with interposition of a bottom-sealed cylindrical separator.

In the alkaline battery according to the present invention, the β-nickel oxy-hydroxide produced by chemical oxidation and having mean particle size in the range of 5 to 50 μm is used as the cathode active material, thereby obtaining the alkaline battery having excellent discharge characteristics under a heavy load.

In the alkaline battery according to the present invention, a cathode active material comprising a mixture of β-nickel oxy-hydroxide produced by chemical oxidation and manganese dioxide is used, the β-nickel oxy-hydroxide particles have a mean particle size in the range of 5 to 50 μm, and the manganese dioxide particles have a mean particle size in the range of 10 to 70μm, thereby obtaining an alkaline battery excellent in discharge characteristics under a heavy load, increasing the charge capacity of the cathode without decreasing the reaction area in the cathode/anode, and reducing the production cost of the alkaline battery by using manganese dioxide.

The discharge characteristics under a heavy load and storage characteristics are also improved by adjusting the cumulative pore volume in connection with pore sizes of not larger than 0.5 μm in the β-nickel oxy-hydroxide particles in the range of 10 to 60 μl/g.

The discharge characteristics under a heavy load and storage characteristics are improved by using the cathode active material as a mixture of β-nickel oxy-hydroxide and manganese dioxide, and by adjusting the cumulative pore volume in connection with pore sizes of not larger than 0.5 μm in the β-nickel oxy-hydroxide particles in the range of 10 to 60 μl/g.

An alkaline battery excellent in storage characteristics is obtained by using β-nickel oxy-hydroxide prepared by chemical oxidation and having approximately spherical shape of particle as the cathode active material and by restricting a sulfuric acid radical content therein in the range of 0.5% or less by mass.

The alkaline battery excellent in the cycle characteristics according to the present invention is obtained by adding a given quantity of a fluorinated resin in the cathode mix containing β-nickel oxy-hydroxide as a binder.

Swelling of the cathode due to water generated at the cathode in the charging process is suppressed by providing a porous metal cylinder with a given thickness between the cathode and separator. Consequently, the water generated at the cathode is efficiently transferred to the anode to enable deterioration of the capacity by the charge-discharge cycle to be suppressed and the cycle characteristics to be improved.

**INDUSTRIAL APPLICABILITY**

As described above, the alkaline battery according to the present invention is favorable for applying it to primary and secondary storage batteries as power sources of electronic appliances and the like.

**Claims**

1.  An alkaline battery comprising a cathode mix containing β-nickel oxy-hydroxide as a cathode active material, an anode mix containing zinc as a main component of an anode active material, and an alkaline solution as an electrolyte,
      wherein said β-nickel oxy-hydroxide is obtained by chemical oxidation of nickel hydroxide; and
      wherein said β-nickel oxy-hydroxide has a mean particle size in the range of 5 to 50 μm.

2.  The alkaline battery according to Claim 1, wherein said β-nickel oxy-hydroxide has an approximately spherical shape of particle.

3.  The alkaline battery according to Claim 2, wherein cumulative pore volume in connection with pore sizes of not larger than 0.5 μm in said β-nickel oxy-hydroxide particles is in the range of 10 to 60 μl/g.

4.  The alkaline battery according to Claim 2, wherein proportion of sulfuric acid radial contained in said β-nickel oxy-hydroxide is in the range of not larger than 0.5% by mass.

5.  The alkaline battery according to Claim 2, wherein a bottom-sealed cylindrical battery is formed.

6.  An alkaline battery comprising a cathode mix containing β-nickel oxy-hydroxide and manganese dioxide as cathode active materials, an anode mix containing zinc as a main component of an anode active material, and an alkaline solution as an electrolyte,
      wherein said β-nickel oxy-hydroxide is obtained by chemical oxidation of nickel hydroxide;
      wherein said β-nickel oxy-hydroxide has a mean particle size in the range of 5 to 50 μm; and
      wherein said manganese dioxide has a mean particle size in the range of 10 to 70 μm.

7.  The alkaline battery according to Claim 6, wherein said β-nickel oxy-hydroxide has an approximately spherical shape of particle.

8.  The alkaline battery according to Claim 7, wherein cumulative pore volume in connection with pore sizes of not larger than 0.5 μm in mixed particles of said β-nickel oxy-hydroxide particles and said manganese dioxide is in the range of 10 to 60 μl/g.

9.  The alkaline battery according to Claim 7, wherein proportion of sulfuric acid radial contained in said β-nickel oxy-hydroxide is in the range of not larger than 0.5% by mass.

10. The alkaline battery according to Claim 7, wherein a bottom-sealed cylindrical battery is formed.

11. An inside-out type alkaline battery comprising a cathode mix containing β-nickel oxy-hydroxide and a conductive material as a cathode active material, an anode mix containing zinc as a main component of an anode active material, an alkaline solution as an electrolyte, and a separator disposed between a cathode comprising said cathode mix and an anode comprising said anode mix,
      wherein said β-nickel oxy-hydroxide is obtained by chemical oxidation of nickel hydroxide, and
      wherein said cathode mix includes a fluorinated resin as a binder.

12. The alkaline battery according to Claim 11, wherein an amount of said added fluorinated resin is in the range of 0.1 to 1.0% by weight.

13. The alkaline battery according to Claim 11, wherein said fluorinated resin is any one of polytetrafluoroethylene (PTFE), tetrafluoroethylene-hexafluoropropylene copolymer (FEP) and polychlorotrifluoroethylene (PCTFE).

14. The alkaline battery according to Claim 11, wherein a porous metal cylinder is provided between said cathode and said separator.

**15.** The alkaline battery according to Claim 14, wherein said porous metal cylinder has a thickness of 50 to 200 μm, and is formed of at least a kind of metal selected from the group constituting of stainless steel, nickel, copper, and tin.

**16.** The alkaline battery according to Claim 14, wherein said porous metal cylinder comprises any one of punching metal, metal net, and expand metal.

**Amended claims under Art. 19.1 PCT**

**1.** (Deleted)

**2.** (Amended) An alkaline battery comprising a cathode mix containing β-nickel oxy-hydroxide as a cathode active material, an anode mix containing zinc as a main component of an anode active material, and an alkaline solution as an electrolyte,
wherein said β-nickel oxy-hydroxide is obtained by chemical oxidation of nickel hydroxide;
wherein said β-nickel oxy-hydroxide has a mean particle size in the range of 5 to 50 μm; and
wherein said β-nickel oxy-hydroxide has an approximately spherical shape of particle.

**3.** The alkaline battery according to Claim 2, wherein cumulative pore volume in connection with pore sizes of not larger than 0.5 μm in said β-nickel oxy-hydroxide particles is in the range of 10 to 60 μl/g.

**4.** The alkaline battery according to Claim 2, wherein proportion. of sulfuric acid radial contained in said β-nickel oxy-hydroxide is in the range of not larger than 0.5% by mass.

**5.** The alkaline battery according to Claim 2, wherein a bottom-sealed cylindrical battery is formed.

**6.** An alkaline battery comprising a cathode mix containing β-nickel oxy-hydroxide and manganese dioxide as cathode active materials, an anode

# F I G.  1

1 0 0

# F I G .  2

DISCHARGE TIME (min) vs MEAN PARTICLE SIZE (μm)

# F I G .  3

DISCHARGE TIME CURVE OF β–NiOOH PREPARED BY CHEMICAL OXIDATION
DISCHARGE TIME CURVE OF γ–NiOOH PREPARED BY CHEMICAL OXIDATION

DISCHARGE TIME (min) vs MEAN PARTICLE SIZE (μm)

# F I G. 4

DISCHARGE TIME CURVE WHEN THE MIXING RATIO OF $\beta$-NiOOH IS 10%
DISCHARGE TIME CURVE WHEN THE MIXING RATIO OF $\beta$-NiOOH IS 30%
DISCHARGE TIME CURVE WHEN THE MIXING RATIO OF $\beta$-NiOOH IS 50%

DISCHARGE TIME (min)

MEAN PARTICLE SIZE ($\mu$m)

# F I G. 5

DISCHARGE TIME CURVE IMMEDIATELY AFTER PRODUCTION
DISCHARGE TIME CURVE AFTER STORAGE AT 60°C FOR 20 DAYS
CURVE OF SELF-DISCHARGE RATE

DISCHARGE TIME (min)

SELF-DISCHARGE RATE (%)

CUMULATIVE PORE VOLUME ($\mu$l/g)

# F I G. 6

# F I G. 7

# F I G. 8

# F I G. 9

# F I G．1 0

# F I G．1 1

# F I G . 1 2

# F I G . 1 3

EP 1 445 812 A1

# F I G . 1 4

Legend:
- ■ DISCHARGE CAPACITY CURVE AFTER 100 CYCLES
- ♦ DISCHARGE CAPACITY CURVE AFTER 1 CYCLE
- ▲ CHARGE TRANSFER RESISTANCE CURVE AFTER 100 CYCLES

DISCHARGE CAPACITY (mAh) vs AMOUNT OF ADDITION OF FEP (% BY MASS); CHARGE-TRANSFER RESISTANCE (mΩ)

COMPARATIVE EXAMPLE 1 ... COMPARATIVE EXAMPLE 3

# F I G . 1 5

Legend:
- ■ DISCHARGE CAPACITY CURVE AFTER 100 CYCLES
- ♦ DISCHARGE CAPACITY CURVE AFTER 1 CYCLE
- ▲ CHARGE TRANSFER RESISTANCE CURVE AFTER 100 CYCLES

DISCHARGE CAPACITY (mAh) vs AMOUNT OF ADDITION OF PCTFE (% BY MASS); CHARGE-TRANSFER RESISTANCE (mΩ)

COMPARATIVE EXAMPLE 1 ... COMPARATIVE EXAMPLE 4

# F I G. 1 6

1 0 0 A

# F I G. 1 7

# F I G. 1 8

A: WITHOUT POROUS METAL CYLINDER
B: STAINLESS PUNCHING METAL
C: NICKEL PUNCHING METAL
D: COPPER PUNCHING METAL
E: TIN PUNCHING METAL

CAPACITY RETENTION RATIO (%)

KINDS OF METAL (THICKNESS OF 100 μm)

## INTERNATIONAL SEARCH REPORT

| International application No. |
|---|
| PCT/JP02/10683 |

**A. CLASSIFICATION OF SUBJECT MATTER**
Int.Cl⁷ H01M6/08, 4/52, 4/62, 4/66, 10/30

According to International Patent Classification (IPC) or to both national classification and IPC

**B. FIELDS SEARCHED**

Minimum documentation searched (classification system followed by classification symbols)
Int.Cl⁷ H01M6/08, 4/52, 4/62, 4/66, 10/30

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-284075 A (Japan Storage Battery Co., Ltd.), 23 October, 1998 (23.10.98), Par. Nos. [0002], [0010], [0013], [0019] (Family: none) | 1 |
| P,X | JP 2001-325954 A (Sony Corp.), 22 November, 2001 (22.11.01), Par. Nos. [0001], [0027], [0032], [0035] (Family: none) | 1 |

☐ Further documents are listed in the continuation of Box C.     ☐ See patent family annex.

| | | |
|---|---|---|
| * | Special categories of cited documents: | |
| "A" | document defining the general state of the art which is not considered to be of particular relevance | |
| "E" | earlier document but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 January, 2003 (20.01.03) | 04 February, 2003 (04.02.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 445 812 A1**

<table>
<tr><td colspan="2"><strong>INTERNATIONAL SEARCH REPORT</strong></td><td>International application No.<br>PCT/JP02/10683</td></tr>
</table>

**Box I   Observations where certain claims were found unsearchable (Continuation of item 2 of first sheet)**

This international search report has not been established in respect of certain claims under Article 17(2)(a) for the following reasons:

1. ☐   Claims Nos.:

     because they relate to subject matter not required to be searched by this Authority, namely:

2. ☐   Claims Nos.:

     because they relate to parts of the international application that do not comply with the prescribed requirements to such an extent that no meaningful international search can be carried out, specifically:

3. ☐   Claims Nos.:

     because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

    (See extra sheet)

1. ☐   As all required additional search fees were timely paid by the applicant, this international search report covers all searchable claims.

2. ☐   As all searchable claims could be searched without effort justifying an additional fee, this Authority did not invite payment of any additional fee.

3. ☐   As only some of the required additional search fees were timely paid by the applicant, this international search report covers only those claims for which fees were paid, specifically claims Nos.:

4. ☒   No required additional search fees were timely paid by the applicant. Consequently, this international search report is restricted to the invention first mentioned in the claims; it is covered by claims Nos.:   1

**Remark on Protest**    ☐   The additional search fees were accompanied by the applicant's protest.

                       ☐   No protest accompanied the payment of additional search fees.

Form PCT/ISA/210 (continuation of first sheet (1)) (July 1998)

46

| INTERNATIONAL SEARCH REPORT | International application No. |
|---|---|
| | PCT/JP02/10683 |

Continuation of Box No.II of continuation of first sheet(1)

For a group of inventions in claims to fulfill the requirement of unity of invention, there must exist "special technical features" for linking the group of inventions so as to form a single general inventive concept.

Although independent claims 1, 6 and 11 share as a technical matter an alkaline battery which uses an anode mixture containing beta-type nickel oxyhydroxide as an anode active material, a cathode mixture containing zinc as a main cathode active material, and an alkaline aqueous solution as an electrolyte, wherein beta-type nickel oxyhydroxide is obtained by chemically oxidizing nickel hydroxide,

this technical matter is disclosed in a prior-art document, for example, JP 55-30133 A (Tokyo Shibaura Electric Co., Ltd.) 1980. 03. 03, WO 98/34290 A (Sanyo Electric Co., Ltd.) 1998.08. 06, JP 10-284075 A (Japan Storage Battery Co., Ltd.) 1998. 10. 23 and therefore it cannot constitute "a special technical feature". Accordingly, three inventions are recognized.

Next, the above prior-art document, JP 10-284075 A teaches that nickel hydroxide power of 5-50 μm is treated by a mixture gas containing ozone to produce high-purity nickel oxyhydroxide that is then used as the anode active material of a nickel-zinc battery, therefore "an average particle size of beta-type nickel oxyhydroxide being 5-50 μm" as described in claim 1 cannot constitute "a special technical feature", and one invention is recognized in claim 2 referring to claim 1.

Accordingly, claims in this international application describe a total of four inventions, claims 1, 2, 6, 11.

Form PCT/ISA/210 (extra sheet) (July 1998)